# EUROPEAN PATENT APPLICATION

(11) **EP 4 681 917 A1**
(43) Date of publication of application: **21.01.2026**
(21) Application number: 25173750.8
(22) Date of filing: 30.04.2025
(51) Int. Cl.: B32B 15/14, B32B 3/26, B32B 5/02, B32B 5/26, B32B 15/02, B32B 15/08

(54) **LIGHTNING STRIKE PROTECTION MATERIAL ASSEMBLY, SYSTEM, AND METHOD OF USING THE SAME**

(30) Priority: 17.07.2024 US 202418776160
(71) Applicant: The Boeing Company, Arlington, VA 22202 (US)
(72) Inventor: LAM, Benjamin Z., Arlington, 22202 (US); GROSS, Gwen M., Arlington, 22202 (US); MILLER, Melinda D., Arlington, 22202 (US); BOLLES, Jason A., Arlington, 22202 (US); ACKERMAN, Patrice K., Arlington, 22202 (US)
(74) Representative: Boult Wade Tennant LLP

(57) **Abstract**

There is provided a lightning strike protection material assembly (10) including a lightning strike expanded metal foil layer (16) with a lightning strike expanded metal foil (18), and including a resin infused scrim layer (42) having a non-metallic scrim (44) infused with an infused resin (45) having a tailored viscosity (60a) and a tailored cure profile (62a). The lightning strike protection material assembly (10) is configured for laying up (73) on, and co-curing (14a) with, an uncured composite laminate assembly (72a) having a plurality of structural ply layers (75) preimpregnated with a structural resin (70). The structural resin (70) has a structural resin viscosity (60b) and a structural resin cure profile (62b) that are different from the tailored viscosity (60a) and the tailored cure profile (62a), to prevent mixing of the structural resin (70) and the infused resin (45) during co-curing (14a), to allow the infused resin (45) to effectively encapsulate the lightning strike expanded metal foil (18), and to provide a defined resin boundary (78). A cured lightning strike protection composite structure (80) is formed.

## Description

### FIELD

The present disclosure relates generally to lightning strike protection material assemblies, systems, and methods, and in particular, to lightning strike protection material assemblies, systems, and methods for composite structures, such as aircraft composite structures.

### BACKGROUND

Lightning strike protection material systems and methods have been developed to provide lightning strike protection for composite structures, such as aircraft composite structures, rotorcraft composite structures, spacecraft composite structures, and other aerospace vehicle composite structures. Several known lightning strike protection material systems and methods incorporate metal foil systems of various configurations into composite exterior aerosurfaces of aircraft, for example, skin panels on wings, horizontal stabilizers, and fuselage, to provide improved electrical conductivity and distribute and divert current away from flight critical areas and underlying aircraft components, thus minimizing physical damage from lightning strike events.

Known lightning strike protection material systems and methods can include lightning strike protection materials made up of expanded metal foils having resins with cure profiles and viscosities similar to cure profiles and viscosities of structural resins in the composite structures underlying the lightning strike protection materials. Due to the similar cure profiles and viscosities, during cure, the resin of the lightning strike protection material mixes with the structural resin, creating areas in which there are two dissimilar materials in close proximity, and leading to less resin to encapsulate and protect the expanded metal foil. Thus, in an operational environment, during repeated cyclic thermal moisture exposure of the composite structure with the lightning strike protection material, because of the differences in the coefficients of thermal expansion (CTE) and coefficients of moisture expansion (CME) between the lightning strike protection material and the underlying composite structure, and because the lightning strike protection material typically has a higher CTE than the underlying composite structure, the lightning strike protection material can expand more quickly than the underlying composite structure. Such thermal moisture exposure creates stresses and strains and may eventually result in undesirable microcracking in the dissimilar lightning strike protection material and the underlying composite structure due to the large difference in the CTEs. Such microcracks may form in the expanded metal foil region and propagate through the mixed resin area and into the underlying composite structure. This may, in turn, result in increased costs to repair or rework and may compromise the lightning strike protection material system.

Accordingly, there is a need in the art for an improved lightning strike protection material assembly, system, and method that prevents mixing of the resin of the lightning strike protection material and the structural resin of the underlying composite structure during cure or co-cure, that avoids creating areas in which two dissimilar materials are in close proximity to each other, that provides sufficient resin of the lightning strike protection material during cure or co-cure to effectively encapsulate the expanded metal foil of the lightning strike protection material, that minimizes or prevents microcracking and has increased microcracking resistance and that prevents degradation into the underlying composite structure to avoid repair or rework, and that provides advantages over known lightning strike protection material assemblies, systems, and methods.

### SUMMARY

Examples provide for an improved lightning strike protection material assembly, system, and method. As discussed in the below detailed description, versions of the improved lightning strike protection material assembly, system, and method may provide significant advantages over known assemblies, systems, and methods.

In an example, there is provided a lightning strike protection material assembly. The lightning strike protection material assembly comprises a lightning strike expanded metal foil layer comprising a lightning strike expanded metal foil. The lightning strike protection material assembly further comprises a resin infused scrim layer laminated to the lightning strike expanded metal foil layer. The resin infused scrim layer comprises a non-metallic scrim infused with an infused resin. The infused resin has a tailored viscosity and a tailored cure profile.

The lightning strike protection material assembly is configured for laying up on, and co-curing with, an uncured composite laminate assembly comprised of a plurality of structural ply layers preimpregnated with a structural resin. The structural resin has a structural resin viscosity and a structural resin cure profile that are different from the tailored viscosity and the tailored cure profile of the infused resin, to prevent mixing of the structural resin and the infused resin during co-curing, to allow the infused resin to effectively encapsulate the lightning strike expanded metal foil, and to provide a defined resin boundary. A cured lightning strike protection composite structure is formed from co-curing the lightning strike protection material assembly and the uncured composite laminate assembly. The cured lightning strike protection composite structure has lightning strike protection, and has an increased microcracking resistance and a degradation prevention.

In another example, there is provided a lightning strike protection material system. The lightning strike protection material system comprises a lightning strike protection material assembly. The lightning strike protection material assembly comprises a lightning strike expanded metal foil layer comprising a lightning strike expanded metal foil.

The lightning strike protection material assembly further comprises a resin infused scrim layer laminated to the lightning strike expanded metal foil layer. The resin infused scrim layer comprises a non-metallic scrim infused with an infused resin. The infused resin has a tailored viscosity and a tailored cure profile.

The lightning strike protection material system further comprises an uncured composite laminate assembly comprised of a plurality of structural ply layers preimpregnated with a structural resin. The structural resin has a structural resin viscosity and a structural resin cure profile that are different from the tailored viscosity and the tailored cure profile of the infused resin.

The lightning strike protection material assembly is laid up on, and co-cured with, the uncured composite laminate assembly, and during co-curing, the structural resin and the infused resin do not mix and provide a defined resin boundary, and the infused resin effectively encapsulates the lightning strike expanded metal foil. A cured lightning strike protection composite structure is formed from the co-curing of the lightning strike protection material assembly and the uncured composite laminate assembly. The cured lightning strike protection composite structure has lightning strike protection, and has an increased microcracking resistance and a degradation prevention.

In another example, there is provided a method of using a lightning strike protection material system, to provide an increased microcracking resistance and a degradation prevention for a cured lightning strike protection composite structure. The method comprises the step of providing the lightning strike protection material system.

The lightning strike protection material system comprises a lightning strike protection material assembly. The lightning strike protection material assembly comprises a lightning strike expanded metal foil layer comprising a lightning strike expanded metal foil. The lightning strike protection material assembly further comprises a resin infused scrim layer laminated to the lightning strike expanded metal foil layer. The resin infused scrim layer comprises a non-metallic scrim infused with an infused resin. The infused resin has a tailored viscosity and a tailored cure profile.

The lightning strike protection material system further comprises an uncured composite laminate assembly. The uncured composite laminate assembly comprises a plurality of structural ply layers preimpregnated with a structural resin. The structural resin has a structural resin viscosity and a structural resin cure profile that are different from the tailored viscosity and the tailored cure profile of the infused resin.

The method further comprises the step of laying up the lightning strike protection material assembly on the uncured composite laminate assembly.

The method further comprises the step of co-curing in an autoclave with heat, the lightning strike protection material assembly on the uncured composite laminate assembly. During the co-curing, the structural resin and the infused resin do not mix and provide a defined resin boundary, and the infused resin effectively encapsulates the lightning strike expanded metal foil.

The method further comprises the step of obtaining the cured lightning strike protection composite structure formed from the co-curing of the lightning strike protection material assembly and the uncured composite laminate assembly, and using the lightning strike protection material system to provide the increased microcracking resistance and the degradation prevention, and lightning strike protection for the cured lightning strike protection composite structure.

The features, functions, and advantages that have been discussed can be achieved independently in various versions of the disclosure or may be combined in yet other versions, further details of which can be seen with reference to the following description and drawings.

### BRIEF DESCRIPTION OF THE DRAWINGS

The disclosure can be better understood with reference to the following detailed description taken in conjunction with the accompanying drawings, which illustrate preferred and exemplary versions, but which are not necessarily drawn to scale. The drawings are examples and not meant as limitations on the description or claims.
FIG. 1A is an illustration of a block diagram of an exemplary lightning strike protection material assembly;
FIG. 1B is an illustration of a block diagram of an exemplary lightning strike protection material system;
FIG. 2A is an illustration of a front cross-sectional view of an exemplary lightning strike protection material assembly;
FIG. 2B is an illustration of a front cross-sectional view of an exemplary lightning strike protection material system, showing the lightning strike protection material assembly of FIG. 2A applied to an uncured composite laminate assembly;
FIG. 2C is an illustration of a front cross-sectional view of the lightning strike protection material system of FIG. 2B in an autoclave;
FIG. 2D is an illustration of a front cross-sectional view of an exemplary cured lightning strike protection composite structure;
FIG. 2E is an illustration of a front cross-sectional view of the cured lightning strike protection composite structure of FIG. 2D, showing a microcrack;
FIG. 3A is an illustration of a graph showing viscosity versus temperature during cure of an exemplary lightning strike protection material system;
FIG. 3B is an illustration of a graph showing viscosity versus temperature during cure of a prior art known resin system for a lightning strike protection material;
FIG. 4 is an illustration of a flow diagram of an exemplary version of a method;
FIG. 5 is an illustration of a perspective view of an aircraft that incorporates exemplary cured lightning strike protection composite structures;
FIG. 6 is an illustration of a flow diagram of an exemplary aircraft manufacturing and service method; and
FIG. 7 is an illustration of an exemplary block diagram of an aircraft.

The figures shown in this disclosure represent various features of the versions presented, and only differences will be discussed in detail.

### DETAILED DESCRIPTION

Disclosed versions will now be described more fully hereinafter with reference to the accompanying drawings, in which some, but not all of the disclosed versions are shown. Indeed, several different versions may be provided and should not be construed as limited to the versions set forth herein. Rather, these versions are provided so that this disclosure will be thorough and fully convey the scope of the disclosure to those skilled in the art.

This specification includes references to "one version" or "a version". The instances of the phrases "one version" or "a version" do not necessarily refer to the same version. Particular features, structures, or characteristics may be combined in any suitable manner consistent with this disclosure. All features disclosed in the specification, including the claims, abstract, and drawings, and all the steps in any method or process disclosed, may be combined in any combination, except combinations where at least some of such features and/or steps are mutually exclusive. Each feature disclosed in the specification, including the claims, abstract, and drawings, can be replaced by alternative features serving the same, equivalent, or similar purpose, unless expressly stated otherwise.

As used herein, "comprising" is an open-ended term, and as used in the claims, this term does not foreclose additional structures or steps.

As used herein, "configured to" means various parts or components may be described or claimed as "configured to" perform a task or tasks. In such contexts, "configured to" is used to connote structure by indicating that the parts or components include structure that performs those task or tasks during operation. As such, the parts or components can be said to be configured to perform the task even when the specified part or component is not currently operational (e.g., is not on).

As used herein, the terms "first", "second", etc., are used as labels for nouns that they precede, and do not imply any type of ordering (e.g., spatial, temporal, logical, etc.).

As used herein, an element or step recited in the singular and preceded by the word "a" or "an" should be understood as not necessarily excluding the plural of the elements or steps. As used herein, the term "and/or" includes any and all combinations of one or more of the associated listed items. As also used herein, the term "combinations thereof" includes combinations having at least one of the associated listed items, wherein the combination can further include additional, like non-listed items.

As used herein, the phrase "at least one of," when used with a list of items, means different combinations of one or more of the listed items may be used, and only one of each item in the list may be needed. In other words, "at least one of" means any combination of items and number of items may be used from the list, but not all of the items in the list are required. The item may be a particular object, a thing, or a category.

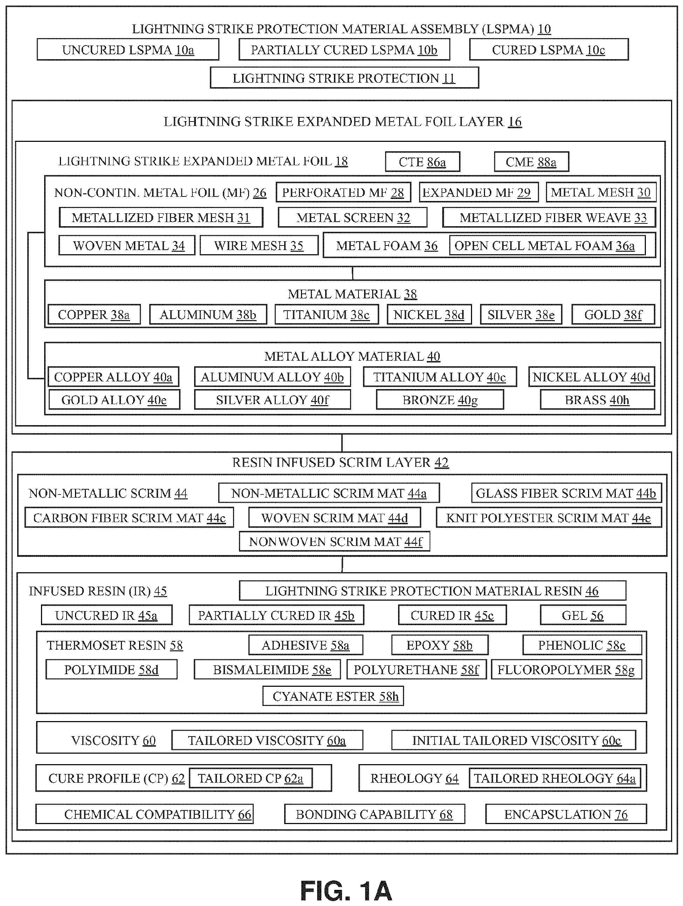

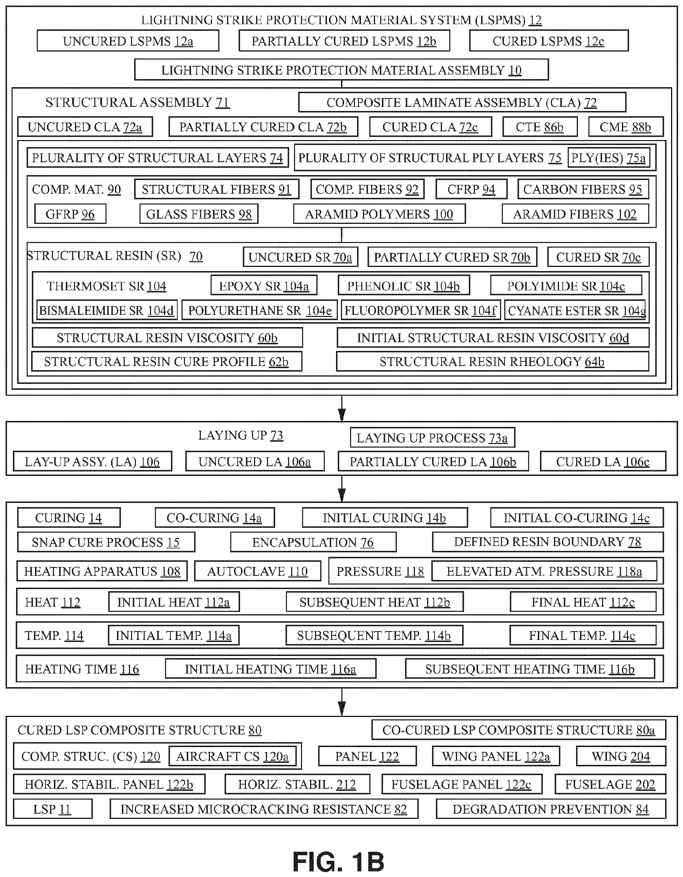

Now referring to FIGS. 1A-1B, FIG. 1A is an illustration of a block diagram of an exemplary lightning strike protection material assembly 10, and FIG. 1B is an illustration of a block diagram of an exemplary lightning strike protection material system 12 that includes the lightning strike protection material assembly 10 of FIG. 1A. The blocks in FIGS. 1A-1B represent elements, and lines connecting the various blocks do not imply any particular dependency of the elements. Furthermore, the connecting lines shown in the various Figures contained herein are intended to represent example functional relationships and/or physical couplings between the various elements, but it is noted that other alternative or additional functional relationships or physical connections may be present in versions disclosed herein. One or more of these blocks may be combined, divided, or combined and divided into different blocks when implemented in an illustrative example. Further, the illustrations of the lightning strike protection material assembly 10 in FIG. 1A and the lightning strike protection material system 12 in FIG. 1B are not meant to imply physical or architectural limitations to the manner in which an illustrative example may be implemented. Other components in addition to, or in place of, the ones illustrated may be used. Some components may be unnecessary.

FIG. 1A shows the lightning strike protection material assembly (LSPMA) 10 comprising an uncured lightning strike protection material assembly (LSPMA) 10a, a partially cured lightning strike protection material assembly (LSPMA) 10b, and/or a cured lightning strike protection material assembly (LSPMA) 10c, at various stages before curing 14 (see FIG. 1B) or co-curing 14a (see FIG. 1B), during curing 14 or co-curing 14a, and after, or post, curing 14 or co-curing 14a. For example, the uncured lightning strike protection material assembly 10a is in the uncured stage before curing 14 or co-curing 14a, the partially cured lightning strike protection material assembly 10b is in the partially cured stage during curing 14 or co-curing 14a, and the cured lightning strike protection material assembly 10c is in the cured stage after, or post, curing 14 or co-curing 14a, where co-curing cures layers simultaneously. As shown in FIG. 1A, the lightning strike protection material assembly 10 provides lightning strike protection 11.

Preferably, the co-curing 14a or curing 14 that the lightning strike protection material assembly 10 undergoes is a snap cure process 15 (see FIG. 1B), such as disclosed in U.S. Patent Number 11,752,708 B2, which is hereby incorporated by reference in its entirety.

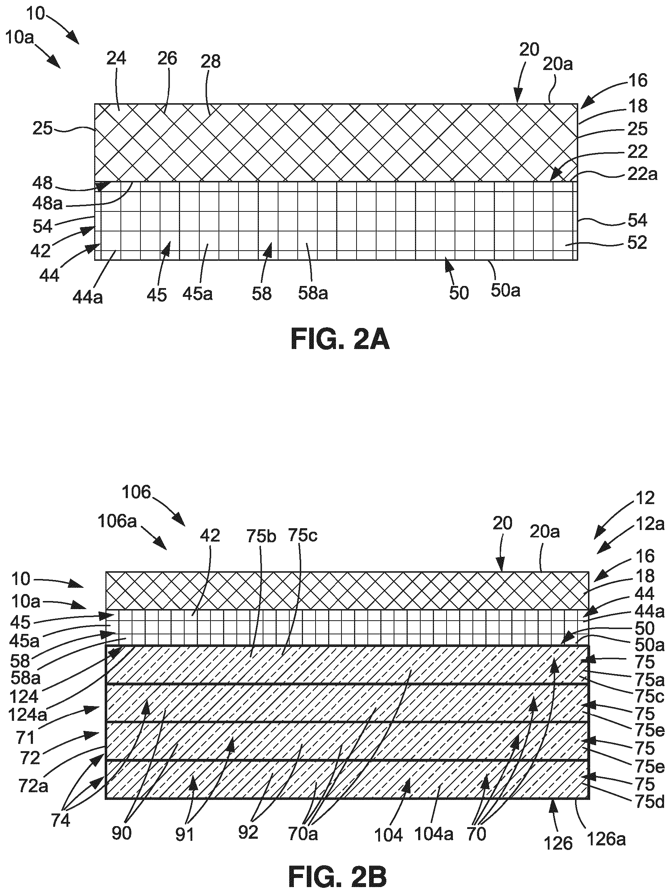

As shown in FIG. 1A, in some exemplary versions, the lightning strike protection material assembly 10 comprises a lightning strike expanded metal foil layer 16. The lightning strike expanded metal foil layer 16 comprises a lightning strike expanded metal foil 18 (see FIG. 1A). The lightning strike expanded metal foil layer 16 has a first side 20 (see FIG. 2A), such as a top side 20a (see FIG. 2A), and a second side 22 (see FIG. 2A), such as a bottom side 22a (see FIG. 2A). The lightning strike expanded metal foil layer 16 further has a metal foil layer body 24 (see FIG. 2A) disposed between the first side 20 and the second side 22, and disposed between ends 25 (see FIG. 2A) of the lightning strike expanded metal foil layer 16.

As shown in FIG. 1A, the lightning strike expanded metal foil 18 comprises a non-continuous (NON-CONTIN.) metal foil (MF) 26 comprising one or more of, a perforated metal foil (MF) 28, an expanded metal foil (MF) 29, a metal mesh 30, a metallized fiber mesh 31, a metal screen 32, a metallized fiber weave 33, a woven metal 34, a wire mesh 35, a metal foam 36, an open cell metal foam 36a, or another suitable non-continuous metal foil 26.

As shown in FIG. 1A, the lightning strike expanded metal foil 18 further comprises a metal material 38 or a metal alloy material 40. As further shown in FIG. 1A, the metal material 38 comprises one or more of, copper 38a, aluminum 38b, titanium 38c, nickel 38d, gold 38e, silver 38f, or another suitable metal material 38. As further shown in FIG. 1A, the metal alloy material 40 comprises one or more of, copper alloy 40a, aluminum alloy 40b, titanium alloy 40c, nickel alloy 40d, gold alloy 40e, silver alloy 40f, bronze 40g, brass 40h, or another suitable metal alloy material 40.

As shown in FIG. 1A, in some exemplary versions, the lightning strike protection material assembly 10 further comprises a resin infused scrim layer 42 laminated to the lightning strike expanded metal foil layer 16. As further shown in FIG. 1A, the resin infused scrim layer 42 comprises a non-metallic scrim 44 infused with an infused resin (IR) 45, also referred to as a lightning strike protection material resin 46.

As further shown in FIG. 1A, the non-metallic scrim 44 comprises one of, a non-metallic scrim mat 44a, a glass fiber scrim mat 44b, a carbon fiber scrim mat 44c, a woven scrim mat 44d, a knit polyester scrim mat 44e, a nonwoven scrim mat 44f, or another suitable non-metallic scrim 44. The non-metallic scrim 44 may further comprise a scrim weave or a carrier with glass fibers or fiberglass reinforcement, or with carbon fibers or carbon fiber reinforcement, with nylon fibers or nylon fiber reinforcement, with polyester fibers or polyester fiber reinforcement, or with another suitable fiber reinforcement.

The resin infused scrim layer 42 has a first side 48 (see FIG. 2A), such as a top side 48a (see FIG. 2A), and a second side 50 (see FIG. 2A), such as a bottom side 50a (see FIG. 2A). The resin infused scrim layer 42 further has a scrim layer body 52 (see FIG. 2A) disposed between the first side 48 and the second side 50, and disposed between ends 54 (see FIG. 2A) of the resin infused scrim layer 42.

In some versions, the lightning strike protection material assembly 10 may further comprise one or more additional layers on top of the lightning strike expanded metal foil layer 16. For example, a thin composite prepreg layer, such as a surfacing film, or another suitable layer, may be added to, and applied over, the top of the lightning strike expanded metal foil layer 16, to function as a protective layer, or a reinforcement layer, on top of the lightning strike expanded metal foil layer 16, to protect the lightning strike expanded metal foil layer 16 during subsequent sanding, painting, polishing, or other postprocessing procedures.

FIG. 1A shows the infused resin 45 comprising an uncured infused resin (IR) 45a, a partially cured infused resin (IR) 45b, and/or a cured infused resin (IR) 45c, at various stages before curing 14 (see FIG. 1B) or co-curing 14a (see FIG. 1B), during curing 14 or co-curing 14a, and after, or post, curing 14 or co-curing 14a. For example, the uncured infused resin 45a is in the uncured stage before curing 14 or co-curing 14a, the partially cured infused resin 45b is in the partially cured stage during curing 14 or co-curing 14a, and the cured infused resin 45c is in the cured stage after, or post, curing 14 or co-curing 14a. When the infused resin 45 is initially heated with curing 14 or co-curing 14a, as discussed in further detail below, the initial heating is sufficient to gel the infused resin 45, such as the uncured infused resin 45a, into a gel 56 (see FIG. 1A).

As shown in FIG. 1A, the infused resin 45, such as the lightning strike protection material resin 46, comprises a thermoset resin 58. As further shown in FIG. 1A, the thermoset resin 58 comprises one or more of, an adhesive 58a, an epoxy 58b, a phenolic 58c, a polyimide 58d, a bismaleimide 58e, a polyurethane 58f, a fluoropolymer 58g, a cyanate ester 58h, or another suitable thermoset resin 58. The infused resin 45 may further comprise an ultraviolet light-resistant infused resin, an aliphatic epoxy infused resin, a fire-retardant infused resin, or another suitable infused resin 45.

As shown in FIG. 1A, the infused resin 45 has a viscosity, such as a tailored viscosity 60a, has a cure profile (CP) 62, such as a tailored cure profile (CP) 62a, and has a rheology 64, such as a tailored rheology 64a. As used herein, "tailored viscosity" means a viscosity of a resin, such as an infused resin in a lightning strike protection material assembly, that is related to a lightning strike expanded metal foil, and that is controlled, adjusted, and selected to be different from a viscosity of a structural resin in a structural assembly, such as a composite laminate assembly, to prevent or minimize mixing of the infused resin and the structural resin during co-curing or curing.

As used herein, "tailored cure profile" means a cure profile, such as optimized times and temperatures of curing, of a resin, such as an infused resin in a lightning strike protection material assembly, that is controlled, adjusted, and selected to be different from a cure profile of a structural resin in a structural assembly, such as a composite laminate assembly, so the infused resin can initiate crosslinking at a lower temperature, to increase the viscosity of the infused resin quickly, allowing the infused resin to encapsulate a lightning strike expanded metal foil, while maintaining separation and no mixing of the infused resin and the structural resin.

As used herein, "tailored rheology" means a rheology or a flow behavior relationship between viscosity, for example, gelling and hardening, such as during curing, of a material, and temperature, such as during cure, of a material, such as a resin, including an infused resin in a lightning strike protection material assembly, that is controlled, adjusted, and selected to be different from a rheology of a structural resin in a structural assembly, such as a composite laminate assembly, to prevent or minimize mixing of the infused resin and the structural resin during co-curing or curing, and to provide improved performance of thermal moisture cycling microcrack resistance in co-cured composite structures, such as co-cured composite laminate structures with structural and lightning strike protection components.

In general, a composite structure is a structure that is formed from two or more constituent component materials with different physical and/or chemical properties that, when combined, produce a composite material having characteristics that are different than the characteristics of the individual components materials. As an example, one type of composite material is carbon fiber reinforced plastic ("CFRP"). CFRP generally includes one or more composite layers or plies laminated together to form a sheet, laminate or layup. Each of the composite layers or plies can include a reinforcement material and a matrix material. The matrix material surrounds, binds and supports the reinforcement material. The reinforcement material provides structural strength to the matrix material and the CFRP. The matrix material is generally a non-conductive polymer such as an epoxy resin. The reinforcement material generally consists of strands of carbon fiber, which are electrically conductive.

The tailored viscosity 60a, the tailored cure profile 62a, and the tailored rheology 64a of the infused resin 45 are related to the lightning strike expanded metal foil 18, and provide a chemical compatibility 66 (see FIG. 1A) and a bonding capability 68 (see FIG. 1A) between the infused resin 45 and a structural resin 70 (see FIG. 1B), such as a structural prepreg resin, of a structural assembly 71 (see FIG. 1B), such as a composite laminate assembly 72 (see FIG. 1B), coupled, or bonded, to the lightning strike protection material assembly 10.

The lightning strike protection material assembly 10 is configured for laying up 73 (see FIG. 1B) in a laying up process 73a, and is laid up, on the structural assembly 71 (see FIG. 1B), such as the composite laminate assembly 72 (see FIG. 1B), for example, an uncured composite laminate assembly 72a, comprised, in some versions, of a plurality of structural layers 74 (see FIG. 1B), such as a plurality of structural ply layers 75 (see FIG. 1B), preimpregnated with the structural resin 70. Alternatively, the structural assembly 71, such as the composite laminate assembly 72, for example, the uncured composite laminate assembly 72a, may be laid up on the lightning strike protection material assembly 10. As shown in FIG. 1B, the structural resin 70 has a structural resin viscosity 60b, a structural resin cure profile 62b, and a structural resin rheology 64b that are different from the tailored viscosity 60a, the tailored cure profile 62a, and the tailored rheology 64a of the infused resin 45, to prevent mixing of the structural resin 70 and the infused resin 45 during co-curing 14a, or curing 14, and to allow the infused resin 45 to effectively encapsulate, via encapsulation 76 (see FIG. 1A), the lightning strike expanded metal foil 18, and to provide a defined resin boundary 78 (see FIG. 1B). In addition, the tailored viscosity 60a of the infused resin 45 is greater than the structural resin viscosity 60b of the structural resin 70, to prevent the mixing of the infused resin 45 and the structural resin 70 during the co-curing 14a, or the curing 14.

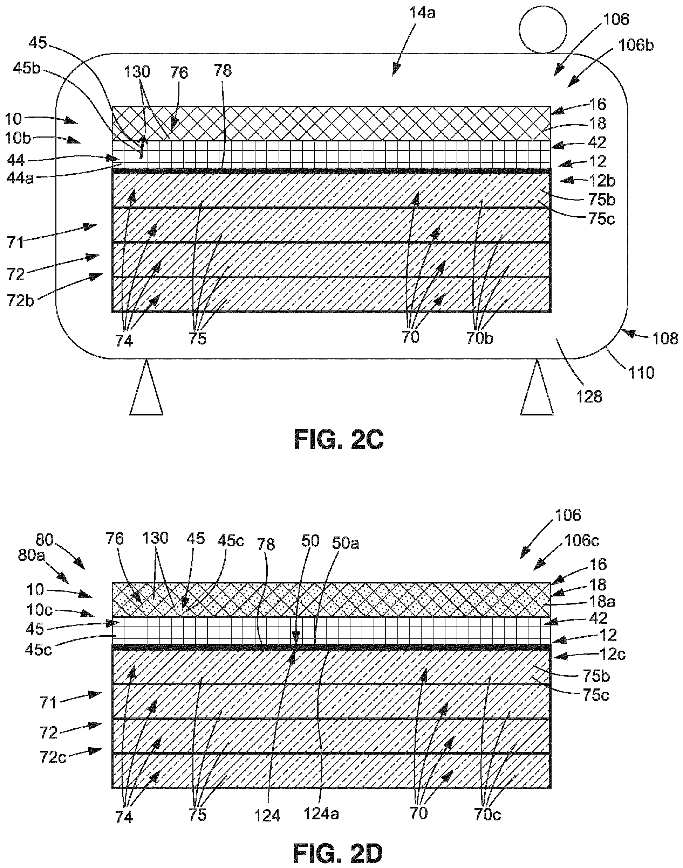

The tailored cure profile 62a of the infused resin 45 initiates crosslinking at a lower temperature 114 (see FIG. 1B), thereby increasing the tailored viscosity 60a of the infused resin 45 quickly, allowing the infused resin 45 to effectively encapsulate the lightning strike expanded metal foil 18, via the encapsulation 76, while maintaining separation and no mixing of the infused resin 45 with the structural resin 70. Moreover, an initial tailored viscosity 60c (see FIG. 1A) of the infused resin 45 may be significantly different than an initial structural resin viscosity 60d (see FIG. 1B) of the structural resin 70, to minimize mixing of the infused resin 45 and the structural resin 70 during initial curing 14b (see FIG. 1B), or initial co-curing 14c (see FIG. 1B). As used herein, "encapsulation" means hardening of an infused resin, such as a thermoset resin, around a lightning strike expanded metal foil, to keep the lightning strike expanded metal foil separate from a structural resin and a composite laminate assembly or structure. For example, during co-curing 14a, the infused resin 45 in the non-metallic scrim 44 is forced into openings 130 (see FIG. 2C) of the lightning strike expanded metal foil 18, so that the infused resin 45 fully encapsulates, or fully surrounds, the lightning strike expanded metal foil 18.

The tailored viscosity 60a, the tailored cure profile 62a, and the tailored rheology 64a of the infused resin 45 are sufficiently and may be significantly different than the structural resin viscosity 60b, the structural resin cure profile 62b, and the structural resin rheology 64b of the structural resin 70, to ensure the infused resin 45 sufficiently and effectively encapsulates the lightning strike expanded metal foil 18, to provide in-service protection. The infused resin 45 has compatible properties to the structural resin 70, related to thermal moisture cycling, and preventing or minimizing resin mixing of the infused resin 45 and the structural resin 70 during co-curing 14a, or curing 14.

A cured lightning strike protection (LSP) composite structure 80 (see FIG. 1B), such as a co-cured lightning strike protection (LSP) composite structure 80a (see FIG. 1B), is formed from the curing 14, or co-curing 14a, of the lightning strike protection material assembly 10, such as the uncured lightning strike protection material assembly 10a, and the structural assembly 71 (see FIG. 1B), such as the composite laminate assembly 72 (see FIG. 1B), for example, the uncured composite laminate assembly 72a (see FIG. 1B). The cured lightning strike protection composite structure 80, such as the co-cured lightning strike protection composite structure 80a, is comprised of the cured lightning strike protection material assembly 10c (see FIG. 1A) coupled to, or bonded to, a cured composite laminate assembly 72c (see FIG. 1B). The cured lightning strike protection material assembly 10c provides lightning strike protection 11 (see FIG. 1A) to the underlying cured composite laminate assembly 72c. Thus, the cured lightning strike protection composite structure 80 has lightning strike protection 11. In addition, the cured lightning strike protection composite structure 80 has an increased microcracking resistance 82 (see FIG. 1B) and a degradation prevention 84 (see FIG. 1B).

The lack of intermixing of the infused resin 45 and the structural resin 70 reduces any damage to the infused resin 45 and the structural resin 70 caused by differences in a coefficient of thermal expansion (CTE) 86a (see FIG. 1A) of the lightning strike expanded metal foil 18 (see FIG. 1A) and a coefficient of thermal expansion (CTE) 86b (see FIG. 1B) of a composite laminate assembly 72 (see FIG. 1B). In addition, the lack of intermixing of the infused resin 45 and the structural resin 70 reduces any damage to the infused resin 45 and the structural resin 70 caused by differences in a coefficient of moisture expansion (CME) 88a (see FIG. 1A) of the lightning strike expanded metal foil 18 and a coefficient of moisture expansion (CME) 88b (see FIG. 1B) of the composite laminate assembly 72. In general, during thermal moisture cycle events, metals expand more than composites, for example, in a temperature range of -70 degrees F (minus seventy degrees Fahrenheit) to 160 degrees F (one-hundred sixty degrees Fahrenheit), and there is potential for cracking or microcracking. The lightning strike protection material assembly 10 and the lightning strike protection material system 12 disclosed herein mitigate the difference in the CTE 86a of the lightning strike expanded metal foil 18 and the CTE 86b of the composite laminate assembly 72 during thermal moisture cycling events, to mitigate or to prevent microcracking or cracking, and to provide increased microcracking resistance 82 in the cured lightning strike protection composite structure 80.

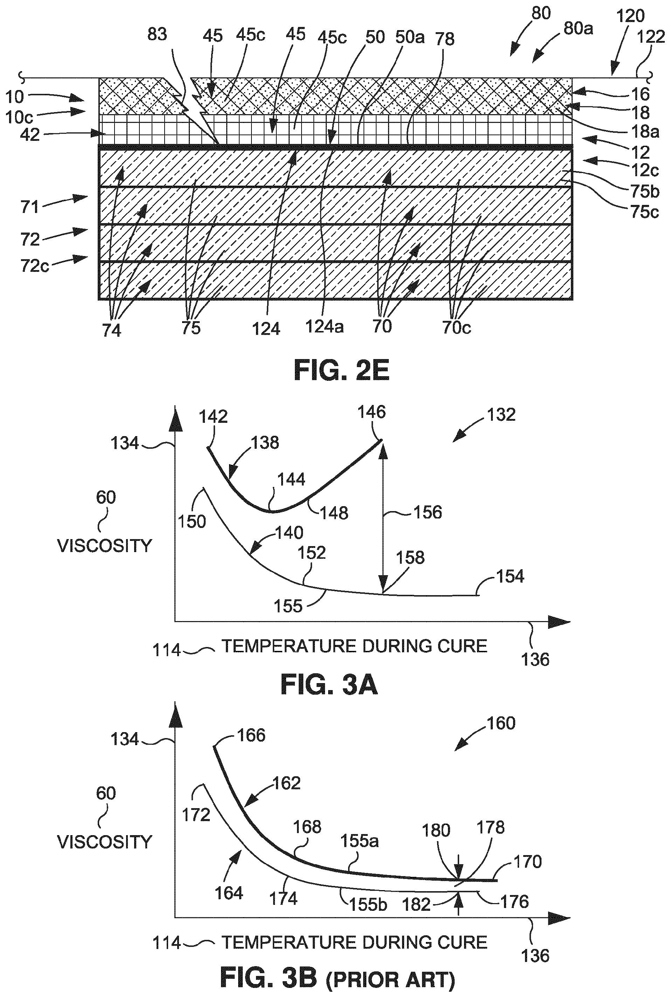

In addition, the cured lightning strike protection composite structure 80 has significantly less surface porosity and improved performance in thermal moisture cycling events, as realized by minimal, or a reduced number of, microcracks 83 (see FIG. 2E) or cracks in the cured lightning strike protection composite structure 80 after exposure to thermal moisture cycling. Moreover, the cured lightning strike protection composite structure 80 has degradation prevention 84, to prevent degradation, such as microcracks or cracks, extending into the structural assembly 71, such as the cured composite laminate assembly 72c, and the plurality of structural ply layers 75. Any microcracks 83 (see FIG. 2E) or cracks that may occur are contained in the cured lightning strike protection material assembly 10c, and do not extend into the structural assembly 71, such as the cured composite laminate assembly 72c.

As used herein, "thermal moisture cycling" or "thermal moisture cycling event" means a process by which a material is exposed to a thermal and/or moisture change during its in-service life, such as absorbing heat and moisture, for example, an aircraft moving back-and-forth between a parked position on the ground at ambient temperature or elevated temperatures, and a flight phase in the air at cold or freezing temperatures.

FIG. 1B shows the lightning strike protection material system (LSPMS) 12 comprising an uncured lightning strike protection material system (LSPMS) 12a, a partially cured lightning strike protection material system (LSPMS) 12b, and/or a cured lightning strike protection material system (LSPMS) 12c, at various stages before curing 14 or co-curing 14a, during curing 14 or co-curing 14a, and after, or post, curing 14 or co-curing 14a. For example, the uncured lightning strike protection material system 12a is in the uncured stage before curing 14 or co-curing 14a, the partially cured lightning strike protection material system 12b is in the partially cured stage during curing 14 or co-curing 14a, and the cured lightning strike protection material system 12c is in the cured stage after, or post, curing 14 or co-curing 14a.

As shown in FIG. 1B, the lightning strike protection material system 12 comprises the lightning strike protection material assembly 10, discussed in detail above, with regard to FIG. 1A. The lightning strike protection material assembly 10 comprises the lightning strike expanded metal foil layer 16 (see FIG. 1A) comprising the lightning strike expanded metal foil 18 (see FIG. 1A). As shown in FIG. 1A, and discussed above, the lightning strike expanded metal foil 18 comprises a non-continuous metal foil 26 comprising one or more of, a perforated metal foil (MF) 28, an expanded metal foil (MF) 29, a metal mesh 30, a metallized fiber mesh 31, a metal screen 32, a metallized fiber weave 33, a woven metal 34, a wire mesh 35, a metal foam 36, an open cell metal foam 36a, or another suitable non-continuous metal foil 26. As further shown in FIG. 1A, and discussed above, the lightning strike expanded metal foil 18 comprises a metal material 38 or a metal alloy material 40, where the metal material 38 comprises one or more of, copper 38a, aluminum 38b, titanium 38c, nickel 38d, gold 38e, silver 38f, or another suitable metal material 38, and the metal alloy material 40 comprises one or more of, copper alloy 40a, aluminum alloy 40b, titanium alloy 40c, nickel alloy 40d, gold alloy 40e, silver alloy 40f, bronze 40g, brass 40h, or another suitable metal alloy material 40.

As discussed above, the lightning strike protection material assembly 10 further comprises the resin infused scrim layer 42 (see FIG. 1A) laminated to the lightning strike expanded metal foil layer 16. The resin infused scrim layer 42 comprises the non-metallic scrim 44 (see FIG. 1A) infused with the infused resin 45 (see FIG. 1A), also referred to as the lightning strike protection material resin 46 (see FIG. 1A). As further shown in FIG. 1A, the non-metallic scrim 44 comprises one of, a non-metallic scrim mat 44a, a glass fiber scrim mat 44b, a carbon fiber scrim mat 44c, a woven scrim mat 44d, a knit polyester scrim mat 44e, a nonwoven scrim mat 44f, or another suitable non-metallic scrim 44. As further shown in FIG. 1A, the infused resin 45 comprises the thermoset resin 58 comprising one or more of, an adhesive 58a, an epoxy 58b, a phenolic 58c, a polyimide 58d, a bismaleimide 58e, a polyurethane 58f, a fluoropolymer 58g, a cyanate ester 58h, or another suitable thermoset resin 58. As further shown in FIG. 1A, the infused resin 45 has the tailored viscosity 60a, the tailored cure profile 62a, and the tailored rheology 64a.

As shown in FIG. 1B, the lightning strike protection material system 12 further comprises the structural assembly 71, such as the composite laminate assembly 72. As further shown in FIG. 1B, the composite laminate assembly 72 has a coefficient of thermal expansion (CTE) 86b and a coefficient of moisture expansion (CME) 88b. As further shown in FIG. 1B, the composite laminate assembly (CLA) 72 comprises, and may be in the form of, an uncured composite laminate assembly (CLA) 72a, a partially cured composite laminate assembly (CLA) 72b, or a cured composite laminate assembly (CLA) 72c. The uncured composite laminate assembly 72a, the partially cured composite laminate assembly 72b, and/or the cured composite laminate assembly 72c are present at various stages before curing 14 or co-curing 14a, during curing 14 or co-curing 14a, and after, or post, curing 14 or co-curing 14a. For example, the uncured composite laminate assembly 72a is in the uncured stage before curing 14 or co-curing 14a, the partially cured composite laminate assembly 72b is in the partially cured stage during curing 14 or co-curing 14a, and the cured composite laminate assembly 72c is in the cured stage after, or post, curing 14 or co-curing 14a.

The structural assembly 71, such as the composite laminate assembly 72, for example, in the form of the uncured composite laminate assembly 72a, the partially cured composite laminate assembly 72b, and the cured composite laminate assembly 72c, comprises a plurality of structural layers 74 (see FIG. 1B), such as a plurality of structural ply layers 75 (see FIG. 1B), preimpregnated with a structural resin 70 (see FIG. 1B), such as a structural prepreg resin. Each structural ply layer 75 comprises a ply 75a (see FIG. 1B), and the plurality of structural ply layers 75 comprise a plurality of plies 75a.

The plurality of structural ply layers 75 and the plies 75a each comprises a composite material (COMP. MAT.) 90 (see FIG. 1B) having structural fibers 91, such as composite (COMP.) fibers 92 (see FIG. 1B). As shown in FIG. 1B, the composite material 90 may comprise one or more of, one or more carbon-fiber reinforced polymers (CFRP(S)) 94, or carbon-fiber reinforced plastics, having carbon fibers 95, one or more glass-fiber reinforced polymers (GFRP(S)) 96, or glass-fiber reinforced plastics, having glass fibers 98 or fiberglass fibers, one or more aramid polymers 100, or aramid plastics, having aramid fibers 102, where "aramid" means aromatic polyamide, or another suitable composite material 90 having structural fibers 91, such as composite fibers 92.

The composite material 90 comprises a matrix of structural resin 70 (see FIG. 1B) reinforced with the composite fibers 92. Each structural layer 74, such as the structural ply layer 75, may include a plurality of the structural fibers 91, such as the composite fibers 92, which may be at least partially, or even completely, encapsulated within the structural resin 70, within an uncured structural resin (SR) 70a (see FIG. 1B), within a partially cured structural resin (SR) 70b (see FIG. 1B), and/or within a cured structural resin (SR) 70c (se FIG. 1B). Examples of the plurality of the structural fibers 91, such as the composite fibers 92, include a plurality of carbon fibers 95, a plurality of glass fibers 98 or fiberglass fibers, and/or a plurality of aramid fibers 102, or other suitable structural fibers 91. In a preferred example, the structural layer 74 and/or the structural fibers 91, such as the composite fibers 92, include and/or are arranged in the plurality of structural ply layers 75 with layered plies 75a of composite material 90, which includes the structural resin 70, such as in the form of the uncured structural resin 70a, the partially cured structural resin 70b, and/or the cured structural resin 70c.

The plurality of structural layers 74 may include the plurality of structural ply layers 75 made of composite material 90 that includes the structural resin 70, such as the uncured structural resin 70a. Each of the plurality of structural layers 74, such as the plurality of structural ply layers 75, may include a plurality of structural fibers 91, such as a plurality of composite fibers 92, at least partially encapsulated within the structural resin 70, such as the uncured structural resin 70a. Each of the plurality of structural layers 74, such as the plurality of structural ply layers 75, may include a plurality of carbon fibers 95, at least partially encapsulated within the structural resin 70, such as the uncured structural resin 70a.

As shown in FIG. 1B, in some versions, the structural resin (SR) 70 preferably comprises a thermoset structural resin (SR) 104, comprising one or more of, an epoxy structural resin (SR) 104a, a phenolic structural resin (SR) 104b, a polyimide structural resin (SR) 104c, a bismaleimide structural resin (SR) 104d, such as a polybismaleimide structural resin, a polyurethane structural resin (SR) 104e, a fluoropolymer structural resin (SR) 104f, a cyanate ester structural resin (SR) 104g, or another suitable thermoset structural resin 104. In some other versions, the structural resin 70 may include and/or be any suitable resin that may have, define, and/or exhibit the structural resin viscosity 60b (see FIG. 1B), such as an initial structural resin viscosity 60d (see FIG. 1B), the structural resin cure profile 62b (see FIG. 1B), the structural resin rheology 64b (see FIG. 1B), a structural resin gel point temperature, and/or a structural resin gel time.

As further shown in FIG. 1B, the structural resin 70 has the structural resin viscosity 60b such as the initial structural resin viscosity 60d, the structural resin cure profile 62b, and the structural resin rheology 64b, that are different from the tailored viscosity 60a, the tailored cure profile 62a, and the tailored rheology 64a of the infused resin 45, to prevent mixing of the structural resin 70 and the infused resin 45 during co-curing 14a (see FIG. 1B), or curing 14 (see FIG. 1B), and to allow the infused resin 45 to effectively encapsulate, via encapsulation 76 (see FIG. 1B), the lightning strike expanded metal foil 18, and to provide a defined resin boundary 78 (see FIG. 1B), i.e., a distinct resin boundary, where there is a clear separation of the structural resin 70 and the infused resin 45 layers in the cured end product. This is different from known resin systems where mixing of a resin, such as a scrim resin, and a structural laminate resin occurs during co-cure or cure, so that no defined or distinct resin boundary is formed, i.e., an indistinct resin boundary where the structural resin 70 and infused resin 45 layers gradually merge.

As shown in FIG. 1B, the lightning strike protection material assembly 10, such as the uncured lightning strike protection material assembly 10a (see FIG. 1A), is laid up, via the laying up process 73a, on the composite laminate assembly 72, such as the uncured composite laminate assembly 72a, to form a lay-up assembly (ASSY.) (LA) 106. As shown in FIG. 1B, the lay-up assembly (LA) 106 may be in the form of an uncured lay-up assembly (LA) 106a, a partially cured lay-up assembly (LA) 106b, and/or a cured lay-up assembly (LA) 106c, depending on the stage of co-curing 14a or curing 14, such as before co-curing 14a, during co-curing 14a, or after, or post, co-curing 14a.

The lay-up assembly 106, such as the uncured lay-up assembly 106a, comprising the uncured lightning strike protection material assembly 10a laid up on, and coupled to, the uncured composite laminate assembly 72a, is placed in a heating apparatus 108 (see FIG. 1B), such as an autoclave 110 (see FIG. 1B), or another suitable heating apparatus 108, to undergo co-curing 14a (see FIG. 1B), or curing 14 (see FIG. 1B). Preferably, the uncured lay-up assembly 106a, comprising the uncured lightning strike protection material assembly 10a laid up on, and coupled to, the uncured composite laminate assembly 72a, undergoes the snap cure process 15 (see FIG. 1B), such as disclosed in U.S. Patent Number 11,752,708 B2, which is hereby incorporated by reference in its entirety.

During co-curing 14a in the heating apparatus 108, such as the autoclave 110, the lay-up assembly 106, such as the uncured lay-up assembly 106a, comprising the uncured lightning strike protection material assembly 10a laid up on, and coupled to, the uncured composite laminate assembly 72a, is heated, such as initially heating, with heat 112 (see FIG. 1B), such as an initial heat 112a (see FIG. 1B), at a temperature (TEMP.) 114 (see FIG. 1B), such as an initial temperature (TEMP.) 114a (see FIG. 1B), to generate the partially cured lay-up assembly 106b (see FIG. 1B) comprising the partially cured lightning strike protection material assembly 10b (see FIG. 1A) laid up on, and coupled to, the partially cured composite laminate assembly 72b (see FIG. 1B). The initial temperature 114a with the initial heat 112a and initially heating is preferably at least 90° C (ninety degrees Celsius, 194 degrees Fahrenheit (° F)) and at most 140° C (one-hundred forty degrees Celsius, 284 degrees Fahrenheit (° F)). The initially heating includes initially heating for a heating time 116 (see FIG. 1B), such as an initial heating time 116a (see FIG. 1B), of at least 2 (two) minutes and at most 30 (thirty) minutes. The initially heating with the initial heat 112a is sufficient to gel the infused resin 45, which is uncured, to become the gel 56 (see FIG. 1A), but the initially heating with the initial heat 112a is insufficient to gel the structural resin 70, which is uncured.

During co-curing 14a in the heating apparatus 108, such as the autoclave 110, the partially cured lay-up assembly 106b comprising the partially cured lightning strike protection material assembly 10b laid up on, and coupled to, the partially cured composite laminate assembly 72b, is then subsequently heated, such as subsequently heating, with a subsequent heat 112b (see FIG. 1B), at a desired subsequent temperature (TEMP.) 114b (see FIG. 1B), until it reaches a final heat 112c, and to a final temperature (TEMP.) 114c, which is greater than the initial temperature 114a, to generate the cured layup assembly 106c (see FIG. 1B) comprising the cured lightning strike protection material assembly 10c laid up on, and coupled to, the cured composite laminate assembly 72c. A combination of the initially heating, the subsequently heating, and the final heating is sufficient to cure, such as fully cure, both the infused resin 45 and the structural resin 70.

The subsequently heating with the subsequent heat 112b includes heating for a subsequent heating time 116b (see FIG. 1B) of at least 15 (fifteen) minutes and at most 120 (one hundred twenty) minutes. The final temperature 114c, such as the final cure temperature, with the final heat 112c and the final heating is preferably at least 120° C (one-hundred twenty degrees Celsius, 248 degrees Fahrenheit (° F)), and at most 260° C (two-hundred sixty degrees Celsius, 500 degrees Fahrenheit (° F)). A difference between the final temperature 114c, such as the final cure temperature, and the initial temperature 114a is at least 20° C (twenty degrees Celsius, 68 degrees Fahrenheit (° F)). The initially heating includes initially heating for the initial heating time 116a, wherein the subsequently heating includes heating for a subsequent heating time 116b, and further wherein a difference between the subsequent heating time 116b and the initial heating time 116a is at least 10 (ten) minutes.

The co-curing 14a of the lay-up assembly 106 comprising the uncured lightning strike protection material assembly 10a laid up on, and coupled to, the uncured composite laminate assembly 72a, in the heating apparatus 108, such as the autoclave 110, with heat 112, may further comprise applying a pressure 118 (see FIG. 1B) to at least one of, the uncured composite laminate assembly 72a and during the initially heating at the initial heat 112a, or the partially cured composite laminate assembly 72b and during the subsequently heating at the subsequent heat 112b. In some examples, applying the pressure 118 includes applying an elevated atmospheric (ATM.) pressure 118a at 0 to 150 psi (zero to one-hundred fifty pounds per square inch) (0 atm (atmosphere) to 10.2 atm (atmospheres)) (0 Pa to 1034 kPa) to the uncured composite laminate assembly 72a and/or to the partially cured composite laminate assembly 72b. In some examples, the applying the pressure 118 includes utilizing the heating apparatus 108, such as the autoclave 110, autoclaving the uncured composite laminate assembly 72a during the initially heating, and/or autoclaving the partially cured composite laminate assembly 72b during the subsequently heating.

During co-curing 14a, the structural resin 70 and the infused resin 45 do not mix and provide the defined resin boundary 78 (see FIGS. 1B, 2D) between the resin infused scrim layer 42 (see FIG. 1A) of the lightning strike protection material assembly 10, and a top structural ply layer 75b (see FIGS. 2C, 2D) comprising a top ply 75c (see FIG. 2D), of the composite laminate assembly 72, such as in the form of the partially cured laminate assembly 72b (see FIG. 2C), and the cured composite laminate assembly 72c (see FIG. 2D). The infused resin 45 effectively encapsulates the lightning strike expanded metal foil 16 (see FIGS. 1A, 2D).

As shown in FIG. 1B, after the co-curing 14a, or curing 14, is complete or final, for example, after completion of the snap cure process 15, the cured lightning strike protection composite structure 80, such as the co-cured lightning strike protection composite structure 80a, is obtained. The cured lightning strike protection composite structure 80, such as the co-cured lightning strike protection composite structure 80a, comprises the cured lay-up assembly 106c (see FIG. 1B) comprising the cured lightning strike protection material assembly 10c (see FIG. 1A) co-cured with the structural assembly 71, such as the cured composite laminate assembly 72c.

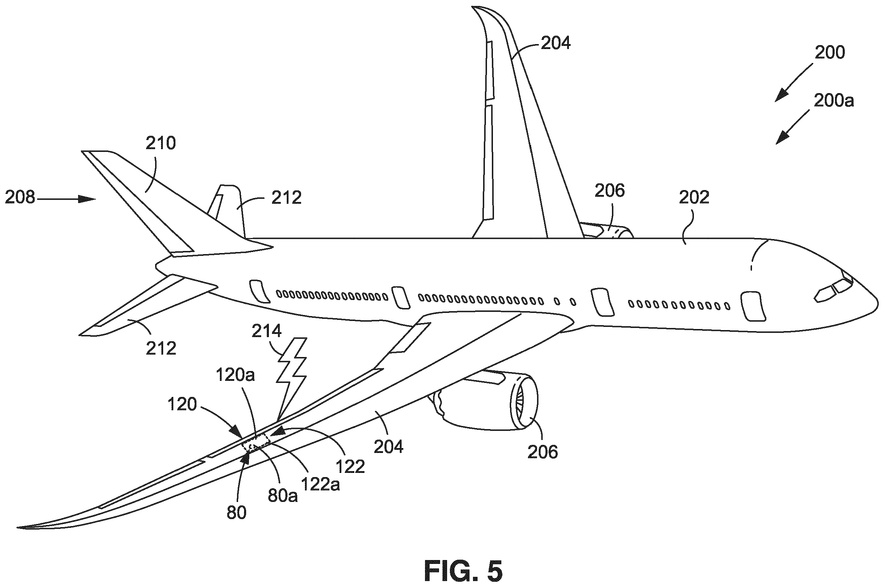

As shown in FIG. 1B, the cured lightning strike protection composite structure 80, such as the co-cured lightning strike protection composite structure 80a, may comprise, or be part of, a composite (COMP.) structure (STRUC.) (CS) 120, such as an aircraft composite structure (CS) 120a, in the form of a panel 122, such as a wing panel 122a of a wing 204 of an aircraft 200a (see FIG. 5), or such as a horizontal (HORIZ.) stabilizer (STABIL.) panel 122b of a horizontal (HORIZ.) stabilizer (STABIL.) 212 of an aircraft 200a (see FIG. 5), or such as a fuselage panel 122c of a fuselage 202 of an aircraft 200a (see FIG. 5). The cured lightning strike protection composite structure 80, such as the co-cured lightning strike protection composite structure 80a, may comprise, or be part of, another suitable composite structure 120 or another suitable aircraft composite structure 120a.

As shown in FIG. 1B, the cured lightning strike protection composite structure 80, such as the co-cured lightning strike protection composite structure 80a, has lightning strike protection (LSP) 11, and has an increased microcracking resistance 82 and a degradation prevention 84.

As discussed above, the cured lightning strike protection composite structure 80, such as the co-cured lightning strike protection composite structure 80a, has significantly less surface porosity and improved performance in thermal moisture cycling events, as realized by minimal, or a reduced number of, microcracks 83 (see FIG. 2E), or cracks, in the cured lightning strike protection composite structure 80, such as the co-cured lightning strike protection composite structure 80a, after exposure to thermal moisture cycling. Moreover, the cured lightning strike protection composite structure 80, such as the co-cured lightning strike protection composite structure 80a, has degradation prevention 84, to prevent degradation, such as microcracks or cracks, extending into the structural assembly 71, such as the cured composite laminate assembly 72c, and the plurality of structural ply layers 75. Any microcracks 83 (see FIG. 2E) or cracks that may occur are contained in the cured lightning strike protection material assembly 10c, and do not extend into the structural assembly 71, such as the cured composite laminate assembly 72c.

Now referring to FIG. 2A, FIG. 2A is an illustration of a front cross-sectional view of an exemplary lightning strike protection material assembly 10, such as an uncured lightning strike protection material assembly 10a, prior to co-curing 14a (see FIG. 1B) or curing 14 (see FIG. 1B), such as with the snap cure process 15 (see FIG. 1B). As shown in FIG. 2A, the lightning strike protection material assembly 10, such as the uncured lightning strike protection material assembly 10a, comprises the lightning strike expanded metal foil layer 16 comprised of the lightning strike expanded metal foil 18. As further shown in FIG. 2A, the lightning strike expanded metal foil layer 16 has the first side 20 such as the top side 20a, the second side 22 such as the bottom side 22a, and the metal foil layer body 24 disposed between the first side 20 and the second side 22, and disposed between the ends 25 of the lightning strike expanded metal foil layer 16.

As further shown in FIG. 2A, in some versions, the lightning strike protection material assembly 10, such as the uncured lightning strike protection material assembly 10a, comprises the non-continuous metal foil 26 comprising the perforated metal foil 28. In some other versions, the non-continuous metal foil 26 comprises, as shown in FIG. 1A, an expanded metal foil 29, a metal mesh 30, a metallized fiber mesh 31, a metal screen 32, a metallized fiber weave 33, a woven metal 34, a wire mesh 35, a metal foam 36, an open cell metal foam 36a, or another suitable non-continuous metal foil 26.

As further shown in FIG. 2A, the lightning strike protection material assembly 10, such as the uncured lightning strike protection material assembly 10a, comprises the resin infused scrim layer 42 laminated to the lightning strike expanded metal foil layer 16. As further shown in FIG. 2A, the resin infused scrim layer 42 comprises the non-metallic scrim 44 infused with the infused resin 45.

As shown in FIG. 2A, in some versions, the non-metallic scrim 44 comprises the non-metallic scrim mat 44a. In some other versions, the non-metallic scrim 44 comprises, as shown in FIG. 1A, a glass fiber scrim mat 44b, a carbon fiber scrim mat 44c, a woven scrim mat 44d, a knit polyester scrim mat 44e, a nonwoven scrim mat 44f, or another suitable non-metallic scrim 44.

As further shown in FIG. 2A, in some versions, the infused resin 45 comprises an uncured infused resin 45a, comprising a thermoset resin 58, for example, an adhesive 58a. In some other versions, the thermoset resin 58, comprises, as shown in FIG. 1A, an epoxy 58b, a phenolic 58c, a polyimide 58d, a bismaleimide 58e, a polyurethane 58f, a fluoropolymer 58g, a cyanate ester 58h, or another suitable thermoset resin 58.

As further shown in FIG. 2A, the resin infused scrim layer 42 has the first side 48, such as the top side 48a, the second side 50, such as the bottom side 50a, and the scrim layer body 52 disposed between the first side 48 and the second side 50, and disposed between the ends 54 of the resin infused scrim layer 42. As further shown in FIG. 2A, the second side 22, such as the bottom side 22a, of the lightning strike expanded metal foil layer 16, is directly applied to and over, coupled to, and in continuous contact with, the first side 48, such as the top side 48a, of the resin infused scrim layer 42.

Now referring to FIG. 2B, FIG. 2B is an illustration of a front cross-sectional view of an exemplary lightning strike protection material system 12, such as an uncured lightning strike protection material system 12a, showing the lightning strike protection material assembly 10, such as the uncured lightning strike protection material assembly 10a, of FIG. 2A laid up on, and applied to, a structural assembly 71, such as a composite laminate assembly 72, for example, an uncured composite laminate assembly 72a, prior to co-curing 14a (see FIG. 1B) or curing 14 (see FIG. 1B), to form the lay-up assembly 106, such as the uncured lay-up assembly 106a.

As shown in FIG. 2B, the lightning strike protection material assembly 10, such as the uncured lightning strike protection material assembly 10a, comprises the lightning strike expanded metal foil layer 16 comprised of the lightning strike expanded metal foil 18, and further comprises the resin infused scrim layer 42 laminated to the lightning strike expanded metal foil layer 16. As shown in FIG. 2B, the resin infused scrim layer 42 comprises the non-metallic scrim 44, such as the non-metallic scrim mat 44a, infused with the infused resin 45, such as the uncured infused resin 45a, for example, the thermoset resin 58 in the form of adhesive 58a. FIG. 2B further shows the first side 20, such as the top side 20a, of the lightning strike expanded metal foil layer 16, and the second side 50, such as the bottom side 50a, of the resin infused scrim layer 42.

FIG. 2B further shows the structural assembly 71, such as the composite laminate assembly 72, for example, in the form of the uncured composite laminate assembly 72a, having the plurality of structural layers 74, such as the plurality of structural ply layers 75, each structural ply layer 75 preimpregnated with the structural resin 70, such as in the form of the uncured structural resin 70a. In some versions, as shown in FIG. 2B, the structural assembly 71, such as the composite laminate assembly 72, has four (4) structural layers 74, such as four (4) structural ply layers 75, where each structural ply layer 75 comprises a ply 75a, and the plurality of structural ply layers 75 comprise a plurality of plies 75a. In some other versions, the structural assembly 71, such as the composite laminate assembly 72, may have less than four (4), or more than four (4), structural layers 74, such as structural ply layers 75. FIG. 2B shows a top structural ply layer 75b comprised of a top ply 75c. FIG. 2B further shows a bottom ply 75d, and intermediate plies 75e stacked between the bottom ply 75d and the top ply 75c. As shown in FIG. 2B, each of the top ply 75c, the bottom ply 75d, and the intermediate plies 75e, has a first side 124, such as a top side 124a, and a second side 126, such as a bottom side 126a.

As shown in FIG. 2B, the second side 50, such as the bottom side 50a, of the resin infused scrim layer 42, of the lightning strike protection material assembly 10, such as the uncured lightning strike protection material assembly 10a, is laid up on, directly applied to and over, coupled to, and in continuous contact with, the first side 124, such as the top side 124a, of the top ply 75c, of the plurality of structural ply layers 75 of the structural assembly 71, such as the composite laminate assembly 72.

As further shown in FIG. 2B, the structural ply layers 75 and the plies 75a each comprises a composite material 90 having structural fibers 91, such as composite fibers 92. As shown in FIG. 1B, the composite material 90 may comprise one or more of, one or more carbon-fiber reinforced polymers 94, or carbon-fiber reinforced plastics, having carbon fibers 95, one or more glass-fiber reinforced polymers 96, or glass-fiber reinforced plastics, having glass fibers 98 or fiberglass fibers, one or more aramid polymers 100, or aramid plastics, having aramid fibers 102, or another suitable composite material 90 having structural fibers 91, such as composite fibers 92.

As further shown in FIG. 2B, in some versions, the structural resin 70 comprises a thermoset structural resin 104, comprising an epoxy structural resin 104a. In some other versions, as shown in FIG. 1B, the thermoset structural resin 104 comprises a phenolic structural resin 104b, a polyimide structural resin 104c, a bismaleimide structural resin 104d, such as a polybismaleimide structural resin, a polyurethane structural resin 104e, a fluoropolymer structural resin 104f, a cyanate ester structural resin 104g, or another suitable thermoset structural resin 104.

Now referring to FIG. 2C, FIG. 2C is an illustration of a front cross-sectional view of the lightning strike protection material system 12, of FIG. 2B, in the form of a partially cured lightning strike protection material system 12b, during co-curing 14a, in an interior 128 of a heating apparatus 108, such as an autoclave 110. FIG. 2C shows the lay-up assembly 106, such as in the form of the partially cured layup assembly 106b, comprising the lightning strike protection material assembly 10, such as in the form of the partially cured lightning strike protection material assembly 10b, laid up on, and applied to, the structural assembly 71, such as the composite laminate assembly 72, for example, in the form of the partially cured composite laminate assembly 72b, during co-curing 14a.

FIG. 2C shows the lightning strike expanded metal foil layer 16 comprised of the lightning strike expanded metal foil 18, of the lightning strike protection material assembly 10, such as in the form of the partially cured lightning strike protection material assembly 10b. FIG. 2C further shows the resin infused scrim layer 42 comprised of the non-metallic scrim 44, such as the non-metallic scrim mat 44a, infused with the infused resin 45, in the form of the partially cured infused resin 45b, of the lightning strike protection material assembly 10, such as in the form of the partially cured lightning strike protection material assembly 10b.

FIG. 2C further shows the structural assembly 71, such as the composite laminate assembly 72, for example, in the form of the partially cured composite laminate assembly 72b, having the plurality of structural layers 74, such as the plurality of structural ply layers 75, with each structural ply layer 75 preimpregnated with the structural resin 70, such as in the form of the partially cured structural resin 70b.

During co-curing 14a, the infused resin 45, such as in the form of the partially cured infused resin 45b, in the non-metallic scrim 44 is forced into openings 130 (see FIG. 2C) of the lightning strike expanded metal foil 18, so that the infused resin 45 fully encapsulates, or fully surrounds, the lightning strike expanded metal foil 18. The infused resin 45 effectively encapsulates, via encapsulation 76 (see FIG. 2C), the lightning strike expanded metal foil 18, to minimize mixing of the infused resin 45 and the structural resin 70 during initial curing 14b (see FIG. 1B) and co-curing 14a. The tailored viscosity 60a (see FIG. 1A) of the infused resin 45 may be significantly different from the structural resin viscosity 60b (see FIG. 1B) of the structural resin 70, which prevents mixing of the infused resin 45 and the structural resin 70 during initial curing 14b (see FIG. 1B) and co-curing 14a. The tailored cure profile 62a (see FIG. 1A) of the infused resin 45 initiates crosslinking at a lower temperature to increase the tailored viscosity 60a quickly, allowing it to encapsulate the lightning strike expanded metal foil 18 effectively, while maintaining separation and no mixing of the infused resin 45 from the structural resin 70 in plurality of structural ply layers 75 in the composite laminate assembly 72. The infused resin 45 with the tailored viscosity 60a and tailored cure profile 62a related to the lightning strike expanded metal foil 18 ensures chemical compatibility 66 (see FIG. 1A) and bonding capability 68 (see FIG. 1A) with the structural resin 70.

FIG. 2C further shows the defined resin boundary 78 that begins forming between the resin infused scrim layer 42 of the lightning strike protection material assembly 10, and the top structural ply layer 75b comprising the top ply 75c of the composite laminate assembly 72. The defined resin boundary 78 helps to prevent or minimize mixing of the infused resin 45 and the structural resin 70 during co-curing 14a.

Now referring to FIG. 2D, FIG. 2D is an illustration of a front cross-sectional view of an exemplary cured lightning strike protection composite structure 80, such as a co-cured lightning strike protection composite structure 80a. As shown in FIG. 2D, the cured lightning strike protection composite structure 80, such as a co-cured lightning strike protection composite structure 80a, comprises the lay-up assembly 106, such as in the form of the cured lay-up assembly 106c, comprising the lightning strike protection material assembly 10, such as in the form of the cured lightning strike protection material assembly 10c, co-cured with, and bonded to, the structural assembly 71, such as the composite laminate assembly 72, for example, in the form of the cured composite laminate assembly 72c. FIG. 2D shows the lightning strike protection material system 12, in the form of the cured lightning strike protection material system 12c, after, or post, co-curing 14a (see FIG. 2C).

As a result of the co-curing 14a (see FIG. 2C), as shown in FIG. 2D, the infused resin 45, such as in the form of the cured infused resin 45c, fully encapsulates, or fully surrounds, via encapsulation 76, the lightning strike expanded metal foil 18 of the lightning strike expanded metal foil layer 16, to obtain an encapsulated lightning strike expanded metal foil 18a. As shown in FIG. 2D, the infused resin 45, such as in the form of the cured infused resin 45c, is in the openings 130 of the lightning strike expanded metal foil 18 and is also in the resin infused scrim layer 42.

FIG. 2D further shows the defined resin boundary 78 that is formed between the second side 50, such as the bottom side 50a, of the resin infused scrim layer 42 of the lightning strike protection material assembly 10, and the first side 124, such as the top side 124a, of the top structural ply layer 75b comprising the top ply 75c of the composite laminate assembly 72, such as the cured composite laminate assembly 72c. The defined resin boundary 78 is a distinct boundary between the resin infused scrim layer 42 and the cured composite laminate assembly 72c, i.e., a distinct resin boundary, where there is a clear separation of the structural resin 70 and the infused resin 45 layers in the cured end product. This is different from known resin systems where mixing of a resin, such as a scrim resin, and a structural laminate resin occurs during co-cure or cure, so that no defined or distinct resin boundary is formed, i.e., an indistinct resin boundary where the structural resin 70 and infused resin 45 layers gradually merge.

As shown in FIG. 2D, the composite laminate assembly 72, such as the cured composite laminate assembly 72c has the plurality of structural layers 74, such as the plurality of structural ply layers 75, with the structural resin 70, such as in the form of the cured structural resin 70c.

The cured lightning strike protection composite structure 80, such as the co-cured lightning strike protection composite structure 80a, has lightning strike protection (LSP) 11 (see FIG. 1B), and has an increased microcracking resistance 82 (see FIG. 1B) and a degradation prevention 84 (see FIG. 1B). The cured lightning strike protection composite structure 80, such as the co-cured lightning strike protection composite structure 80a, with the lightning strike protection material assembly 10 and the lightning strike protection material system 12 disclosed herein mitigate the difference in the CTE 86a (see FIG. 1A) of the lightning strike expanded metal foil 18 and the CTE 86b (see FIG. 1B) of the composite laminate assembly 72 during thermal moisture cycling events, to mitigate or prevent microcracking or cracking, and to provide increased microcracking resistance 82 in the cured lightning strike protection composite structure 80, such as the co-cured lightning strike protection composite structure 80a.

Now referring to FIG. 2E, FIG. 2E is an illustration of a front cross-sectional view of the cured lightning strike protection composite structure 80, such as a co-cured lightning strike protection composite structure 80a, of FIG. 2D, incorporated in a composite structure 120, such as a panel 122, and showing a microcrack 83 formed through the lightning strike expanded metal foil layer 16 comprising the lightning strike expanded metal foil 18 and through the resin infused scrim layer 42, of the lightning strike protection material assembly 10, such as in the form of the cured lightning strike protection material assembly 10c.

As shown in FIG. 2E, the defined resin boundary 78 formed between the second side 50, such as the bottom side 50a, of the resin infused scrim layer 42 of the lightning strike protection material assembly 10, and the first side 124, such as the top side 124a, of the top structural ply layer 75b comprising the top ply 75c of the composite laminate assembly 72, such as the cured composite laminate assembly 72c, prevents the microcrack 83 from extending into the structural assembly 71, such as the composite laminate assembly 72, in the form of the cured composite laminate assembly 72c. The defined resin boundary 78 functions as a barrier to prevent the microcrack 83 from extending into the cured composite laminate assembly 72c. Thus, the cured lightning strike protection composite structure 80, such as the co-cured lightning strike protection composite structure 80a, has degradation prevention 84 (see FIG. 1B) to prevent degradation, such as microcracks 83 or cracks, extending into the structural assembly 71, such as the cured composite laminate assembly 72c, and the plurality of structural ply layers 75. Any microcracks 83 (see FIG. 2E) or cracks that may occur are contained in the cured lightning strike protection material assembly 10c, and do not extend into the structural assembly 71, such as the cured composite laminate assembly 72c.

In addition, the cured lightning strike protection composite structure 80, such as the co-cured lightning strike protection composite structure 80a, has the increased microcracking resistance 82 (see FIG. 1B) to mitigate, minimize, or prevent microcracks 83 from forming in the cured lightning strike protection composite structure 80, such as the co-cured lightning strike protection composite structure 80a. FIG. 2E shows one microcrack 83. Microcracks 83 can be observed during thermocycling, during changes in temperature, during tensile loading, or during fatigue loading. As discussed above, the cured lightning strike protection composite structure 80, such as the co-cured lightning strike protection composite structure 80a, has significantly less surface porosity and improved performance in thermal moisture cycling events, as realized by minimal, or a reduced number of, microcracks 83 (see FIG. 2E), or cracks, in the cured lightning strike protection composite structure 80, such as the co-cured lightning strike protection composite structure 80a, after exposure to thermal moisture cycling.

In contrast to the cured lightning strike protection composite structure 80, such as the co-cured lightning strike protection composite structure 80a, with the lightning strike protection material assembly 10, such as the cured lightning strike protection material assembly 10c, known composite structures with known resin systems, where mixing of a resin, such as a scrim resin, and a structural laminate resin occurs during co-cure or cure, can form a greater number of microcracks, such as multiple microcracks, and have less microcracking resistance, and the microcracks that form can extend into the structural plies of the composite structure, thus potentially increasing degradation of the composite structure. Thus, the cured lightning strike protection composite structure 80, such as the co-cured lightning strike protection composite structure 80a, minimizes the potential in-service degradation of the lightning strike protection material assembly 10, such as the cured lightning strike protection material assembly 10c, allowing it to be effective as needed.

As further shown in FIG. 2E, the cured lightning strike protection composite structure 80, such as the co-cured lightning strike protection composite structure 80a, comprises the lay-up assembly 106, such as in the form of the cured lay-up assembly 106c, comprising the lightning strike protection material assembly 10, such as in the form of the cured lightning strike protection material assembly 10c, co-cured with, and bonded to, the structural assembly 71, such as the composite laminate assembly 72, for example, in the form of the cured composite laminate assembly 72c. FIG. 2E shows the lightning strike protection material system 12, in the form of the cured lightning strike protection material system 12c, after, or post, co-curing 14a (see FIG. 2C).

As further shown in FIG. 2E, the infused resin 45, such as in the form of the cured infused resin 45c, encapsulates the lightning strike expanded metal foil 18 and is also in the resin infused scrim layer 42. As further shown in FIG. 2E, the composite laminate assembly 72, such as the cured composite laminate assembly 72c has the plurality of structural layers 74, such as the plurality of structural ply layers 75, with the structural resin 70, such as in the form of the cured structural resin 70c.

Now referring to FIG. 3A, FIG. 3A is an illustration of a graph 132 showing viscosity 60, or thickness, along a y-axis 134, versus temperature 114, along an x-axis 136, during cure or co-cure of an exemplary lightning strike protection material system 12 (see FIG. 1B), where the lightning strike protection material system 12 has the infused resin 45 (see FIG. 1A) and the structural resin 70 (see FIG. 1B). In the graph 132, the viscosity 60 decreases from top to bottom along the y-axis 134, and the temperature 114 increases from left to right along the x-axis 136.

FIG. 3A shows an infused resin plot 138 and a structural resin plot 140. The infused resin plot 138 represents the infused resin 45 with the tailored viscosity 60a (see FIG. 1A), the tailored cure profile 62a (see FIG. 1A), and the tailored rheology 64a (see FIG. 1A) that undergoes the snap cure process 15 (see FIG. 1B). The structural resin plot 140 represents the structural resin 70 (see FIG. 1B) with the structural resin viscosity 60b (see FIG. 1B), the structural resin cure profile 62b (see FIG. 1B), and the structural resin rheology 64b (see FIG. 1B), that are different from the tailored viscosity 60a, the tailored cure profile 62a, and the tailored rheology 64a of the infused resin 45.

As shown in FIG. 3A, the infused resin plot 138 has a start point 142 where the viscosity 60, or thickness, is high or great. As further shown in FIG. 3A, as the temperature 114 increases, the viscosity 60, or thickness, initially decreases to a mid-point 144, and at the mid-point 144, as the temperature 114 continues to increase, the viscosity 60 then begins to steadily increase from the mid-point 144 to an end point 146, and as cure or co-cure continues, the infused resin 45 cures or co-cures to a hardened or solid state. As shown in FIG. 3A, the infused resin plot 138 has a U-shape 148.

As further shown in FIG. 3A, the structural resin plot 140 has a start point 150 where the viscosity 60, or thickness, is high or great. As further shown in FIG. 3A, as the temperature 114 increases, the viscosity 60, or thickness, decreases to a mid-point 152, and at the mid-point 152, as the temperature 114 continues to increase, the viscosity 60 then continues to slightly decrease and level off from the mid-point 152 to an end point 154, and as cure or co-cure continues, the structural resin cures or co-cures to a hardened or solid state. As shown in FIG. 3A, the infused resin plot 138 has a downward shaped curve or a generally downward shaped curve 155.

As further shown in FIG. 3A, there is a large viscosity difference 156 that is large or great between the viscosity 60 at the end point 146 of the infused resin plot 138 and a viscosity 60 at a point 158 of leveling off on the structural resin plot 140. The large viscosity difference 156 during cure or co-cure prevents or minimizes mixing of the infused resin 45 and the structural resin 70.

Now referring to FIG. 3B, FIG. 3B is an illustration of a graph 160 showing viscosity 60, or thickness, along the y-axis 134, versus temperature 114, along the x-axis 136, during cure or co-cure of a prior art known resin system for a lightning strike protection material having a known resin that does not have a tailored viscosity, a tailored cure profile, or a tailored rheology, and a known structural laminate resin. In the graph 160, the viscosity 60 decreases from top to bottom along the y-axis 134, and the temperature 114 increases from left to right along the x-axis 136.

FIG. 3B shows a resin plot 162 and a structural laminate resin plot 164. The resin plot 162 represents a known resin that does not have a tailored viscosity, a tailored cure profile, and/or a tailored rheology like the infused resin 45 (see FIG. 1A), and the known resin has a viscosity, cure profile, and rheology that are not different from the known structural laminate resin, and does not undergo the snap cure process 15 (see FIG. 1B). The structural laminate resin plot 164 represents a known structural laminate resin.

As shown in FIG. 3B, the resin plot 162 has a start point 166 where the viscosity 60, or thickness, is high or great. As further shown in FIG. 3B, as the temperature 114 increases, the viscosity 60, or thickness, decreases to a mid-point 168, and at the mid-point 168, as the temperature 114 continues to increase, the viscosity 60 then continues to slightly decrease and level off from the mid-point 168 to an end point 170, and as cure or co-cure continues, the resin cures or co-cures to a hardened or solid state. As shown in FIG. 3B, the resin plot 162 has a downward shaped curve or a generally downward shaped curve 155a.

As further shown in FIG. 3B, the structural laminate resin plot 164 has a start point 172 where the viscosity 60, or thickness, is high or great. As further shown in FIG. 3B, as the temperature 114 increases, the viscosity 60, or thickness, decreases to a mid-point 174, and at the mid-point 152, as the temperature 114 continues to increase, the viscosity 60 then continues to slightly decrease and level off from the mid-point 174 to an end point 176, and as cure or co-cure continues, the structural laminate resin cures or co-cures to a hardened or solid state. As shown in FIG. 3B, the structural laminate resin plot 164 has a downward shaped curve or a generally downward shaped curve 155b.

As further shown in FIG. 3B, there is a small viscosity difference 178 that is small between the viscosity 60 at a point 180 near the end point 170 of the resin plot 162 and a viscosity 60 at a point 182 near the end point 176 of the structural laminate resin plot 164. The small viscosity difference 178 during cure or co-cure encourages mixing of the known resin and the known structural laminate resin.

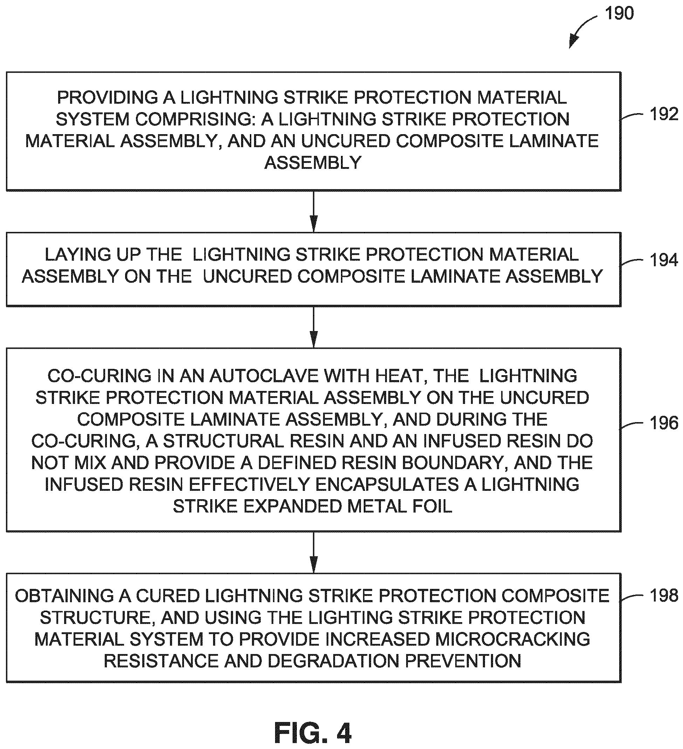

Now referring to FIG. 4, FIG. 4 is an illustration of a flow diagram of an exemplary version of a method 190. In some other versions, there is provided the method 190 of using the lightning strike protection material system 12 (see FIG. 1B), discussed in detail above, to provide an increased microcracking resistance 82 (see FIG. 1B) and a degradation prevention 84 (see FIG. 1B) for a cured lightning strike protection composite structure 80 (see FIG. 1B). The blocks in FIG. 4 represent operations and/or portions thereof, or elements, and lines connecting the various blocks do not imply any particular order or dependency of the operations or portions thereof, or elements. FIG. 4 and the disclosure of the steps of the method 190 set forth herein should not be interpreted as necessarily determining a sequence in which the steps are to be performed. Rather, although one illustrative order is indicated, it is to be understood that the sequence of the steps may be modified when appropriate. Accordingly, certain operations may be performed in a different order or simultaneously.

As shown in FIG. 4, the method 190 comprises the step 192 of providing the lightning strike protection material system 12. As discussed in detail above, the lightning strike protection material system 12 comprises the lightning strike protection material assembly 10 (see FIG. 1A). As discussed in detail above, the lightning strike protection material assembly 10 comprises the lightning strike expanded metal foil layer 16 (see FIGS. 1A, 2A) comprising the lightning strike expanded metal foil 18 (see FIGS. 1A, 2A).

The step 192 of providing the lightning strike protection material system 12 further comprises, providing the lightning strike protection material system 12 with the lightning strike protection material assembly 10, wherein the lightning strike expanded metal foil 18 comprises, as shown in FIG. 1A, a non-continuous metal foil 26 comprising one or more of, a perforated metal foil 28, an expanded metal foil 29, a metal mesh 30, a metallized fiber mesh 31, a metal screen 32, a metallized fiber weave 33, a woven metal 34, a wire mesh 35, a metal foam 36, an open cell metal foam 36a, or another suitable non-continuous metal foil 26.

The step 192 of providing the lightning strike protection material system 12 further comprises, providing the lightning strike protection material system 12 with the lightning strike protection material assembly 10, wherein the lightning strike expanded metal foil 18 further comprises, as shown in FIG. 1A, a metal material 38 comprising one or more of, copper 38a, aluminum 38b, titanium 38c, nickel 38d, gold 38e, silver 38f, or another suitable metal material 38, or further comprises, as shown in FIG. 1A, a metal alloy material 40 comprising one or more of, copper alloy 40a, aluminum alloy 40b, titanium alloy 40c, nickel alloy 40d, gold alloy 40e, silver alloy 40f, bronze 40g, brass 40h, or another suitable metal alloy material.

As discussed in detail above, the lightning strike protection material assembly 10 further comprises a resin infused scrim layer 42 (see FIGS. 1A, 2A) laminated to the lightning strike expanded metal foil layer 16. The resin infused scrim layer 42 comprises a non-metallic scrim 44 (see FIG. 1A) infused with an infused resin 45 (see FIG. 1A). The infused resin 45 has a viscosity 60 (see FIG. 1A), such as a tailored viscosity 60a (see FIG. 1A), has a cure profile 62 (see FIG. 1A), such as a tailored cure profile 62a (see FIG. 1A), and has a rheology 64 (see FIG. 1A), such as a tailored rheology 64a (see FIG. 1A).

The step 192 of providing the lightning strike protection material system 12 further comprises, providing the lightning strike protection material system 12 with the lightning strike protection material assembly 10, where the infused resin 45 comprises as shown in FIG. 1A, a thermoset resin 58 comprising one or more of, an adhesive 58a, an epoxy 58b, a phenolic 58c, a polyimide 58d, a bismaleimide 58e, a polyurethane 58f, a fluoropolymer 58g, a cyanate ester 58h, or another suitable thermoset resin 58.

As discussed in detail above, the lightning strike protection material system 12 further comprises a composite laminate assembly 72 (see FIGS. 1B, 2B), such as an uncured composite laminate assembly 72a (see FIGS. 1B, 2B), comprised of a plurality of structural layers 74 (see FIG. 1B), such as a plurality of structural ply layers 75 (see FIG. 1B), preimpregnated with a structural resin 70 (see FIG. 1B). As shown in FIG. 1B, the structural resin 70 has a structural resin viscosity 60b, a structural resin cure profile 62b, and a structural resin rheology 64b, that are different from the tailored viscosity 60a, the tailored cure profile 62a, and the tailored rheology 64a of the infused resin 45.

The plurality of structural ply layers 75 each comprises a composite material 90 (see FIG. 1B) comprising one of, as shown in FIG. 1B, one or more carbon-fiber reinforced polymers (CFRP) 94, or plastics, one or more glass-fiber reinforced polymers (GFRP) 96, or plastics, or one or more aramid polymers 100 (see FIG. 1B), or another suitable composite material 90. The composite material 90 comprises composite fibers 92 (see FIG. 1B), such as carbon fibers 95 (see FIG. 1B), glass fibers 98 (see FIG. 1B), aramid fibers 102 (see FIG. 1B), or other suitable composite fibers 92. As shown in FIG. 1B, the structural resin 70 comprises a thermoset structural resin 104, comprising one or more of, an epoxy structural resin 104a, a phenolic structural resin 104b, a polyimide structural resin 104c, a bismaleimide structural resin 104d, a polyurethane structural resin 104e, a fluoropolymer structural resin 104f, a cyanate ester structural resin 104g, or another suitable thermoset structural resin 104.

As shown in FIG. 4, the method 190 further comprises the step 194 of laying up 73 (see FIG. 1B), via the laying up process 73a (see FIG. 1B), the lightning strike protection material assembly 10 (see FIG. 1A, 2B) on the uncured composite laminate assembly 72a (see FIGS. 1B, 2B).

As shown in FIG. 4, the method 190 further comprises the step 196 of co-curing 14a, or curing 14, in heating apparatus 108 (see FIG. 2C), such as an autoclave 110 (see FIG. 2C), with heat 112, the lightning strike protection material assembly 10 (see FIG. 2C) on the uncured composite laminate assembly 72a (see FIG. 2C), and during the co-curing 14a, or the curing 14, the structural resin 70 (see FIGS. 1B, 2C) and the infused resin 45 (see FIGS. 1A, 2C) do not mix and provide a defined resin boundary 78 (see FIG. 2C), and the infused resin 45 effectively encapsulates the lightning strike expanded metal foil 18 (see FIG. 2C).

Preferably, the co-curing 14a or curing 14 that the lightning strike protection material assembly 10, such as the uncured lightning strike protection material assembly 10a, and the composite laminate assembly 72 (see FIG. 1B), such as the uncured composite laminate assembly 72a, undergoes is the snap cure process 15 (see FIG. 1B), such as disclosed in U.S. Patent Number 11,752,708 B2.

The step 196 of co-curing 14a, or curing 14, in the autoclave 110 with heat 112, the lightning strike protection material assembly 10 on the uncured composite laminate assembly 72a, further comprises, initially heating the uncured composite laminate assembly 72a to a temperature 114 (see FIG. 1B), such as an initial temperature 114a (see FIG. 1B), to generate a partially cured composite laminate assembly 72b (see FIG. 1B), wherein the initially heating is sufficient to gel the infused resin 45, which is uncured, but is insufficient to gel the structural resin 70, which is uncured, and subsequently heating the partially cured composite laminate assembly 72b to a final temperature 114c (see FIG. 1B), which is greater than the initial temperature 114a, to generate the cured lightning strike protection composite structure 80 (see FIG. 1B, 2D), wherein a combination of the initially heating and the subsequently heating is sufficient to fully cure both the infused resin 45 and the structural resin 70.

The step 196 of co-curing 14a, or curing 14, wherein co-curing14a in the autoclave 110 with heat 112, the lightning strike protection material assembly 10 on the uncured composite laminate assembly 72a, further comprises, applying a pressure 118 (see FIG. 1B) to at least one of, the uncured composite laminate assembly 72a and during the initially heating, or the partially cured composite laminate assembly 72b and during the subsequently heating.

As shown in FIG. 4, the method 190 further comprises the step 198 of obtaining the cured lightning strike protection composite structure 80 (see FIGS. 1B, 2D), such as the co-cured lightning strike protection composite structure 80a (see FIG. 1B), formed from the co-curing 14a, or curing 14, of the lightning strike protection material assembly 10 (see FIGS. 1A, 2A), such as the uncured lightning strike protection material assembly 10a (see FIGS. 1A, 2A), and the composite laminate assembly 72, such as the uncured composite laminate assembly 72a (see FIGS. 1B, 2B), and using the lightning strike protection material system 12 to provide the increased microcracking resistance 82 and the degradation prevention 84, and lightning strike protection 11, for the cured lightning strike protection composite structure 80, such as the co-cured lightning strike protection composite structure 80a.

The step 198 of obtaining the cured lightning strike protection composite structure 80, such as the co-cured lightning strike protection composite structure 80a, further comprises, obtaining the cured lightning strike protection composite structure 80, such as the co-cured lightning strike protection composite structure 80a, comprising a composite structure 120 (see FIG. 1B), such as an aircraft composite structure 120a (see FIG. 1B), such as comprising a panel 122 (see FIG. 1B), for example, one of, a wing panel 122a (see FIGS. 1B, 5) of a wing 204 (see FIGS. 1B, 5) of an aircraft 200a (see FIG. 5), or a horizontal stabilizer panel 122b (see FIG. 1B) of a horizontal stabilizer 212 (see FIGS. 1B, 5) of the aircraft 200a (see FIG. 5), or a fuselage panel 122c (see FIG. 1B) of a fuselage 202 (see FIGS. 1B, 5) of the aircraft 200a (see FIG. 5), or another suitable aircraft panel or structure.

Now referring to FIG. 5, FIG. 5 is an illustration of a perspective view of a vehicle 200, such as an aircraft 200a, that incorporates exemplary cured lightning strike protection composite structures 80 (see also FIGS. 1B, 2D, 2E), such as exemplary co-cured lightning strike protection composite structures 80a (see also FIGS. 1B, 2D, 2E), having a lightning strike protection material system 12 (see FIGS. 1B, 2B), and in composite structures 120, such as aircraft composite structures 120a. As shown in FIG. 5, the vehicle 200, such as the aircraft 200a, comprises the fuselage 202, wings 204, engines 206, and the tail 208. As shown in FIG. 5, the tail 208 comprises a vertical stabilizer 210 and horizontal stabilizers 212.

As shown in FIG. 5, the cured lightning strike protection composite structure 80, such as the co-cured lightning strike protection composite structure 80a, may comprise, or be part of, the composite structure 120, such as the aircraft composite structure 120a, in the form of a panel 122, such as a wing panel 122a, of the wing 204 of the aircraft 200a. The cured lightning strike protection composite structure 80, such as the co-cured lightning strike protection composite structure 80a, may comprise, or be part of, the composite structure 120, such as the aircraft composite structure 120a, in the form of a panel 122, such as a horizontal stabilizer panel 122b (see FIG. 1B) of the horizontal stabilizer 212 (see FIG. 5) of aircraft 200a (see FIG. 5), or such as a fuselage panel 122c (see FIG. 1B) of the fuselage 202 (see FIG. 5) of the aircraft 200a (see FIG. 5), or such as another suitable composite structure 120 or another suitable aircraft composite structure 120a.

The composite structures 120, such as the aircraft composite structures 120a, comprising the wing panels 122a, horizontal stabilizer panels 122b, fuselage panels 122c, or other suitable aircraft panels, may comprise composite structures 120, such as aircraft composite structures 120a, made of composite material 90 (see FIG. 1B), such as carbon-fiber reinforced polymers (CFRP) 94 (see FIG. 1B) or carbon-fiber reinforced plastics, glass-fiber reinforced polymers (GFRP) 96 (see FIG. 1B), or glass-fiber reinforced plastics, or aramid polymers 100 (see FIG. 1B), or another type of composite material 90. The cured lightning strike protection composite structure 80, such as the co-cured lightning strike protection composite structure 80a, having the lightning strike protection material system 12 (see FIGS. 1B, 2D) can be used on aerosurfaces, such as the wings 204, the horizontal stabilizers 212, the fuselage 202, or other aerosurface areas of the aircraft 200a, to provide increased microcracking resistance 82 (see FIG. 1B), degradation prevention 84 (see FIG. 1B), and lightning strike protection 11 (see FIG. 1B).

FIG. 5 further shows a lightning strike 214 striking a wing 204, and the cured lightning strike protection composite structure 80, such as the co-cured lightning strike protection composite structure 80a, having the lightning strike protection material system 12 (see FIG. 1B) and the lightning strike protection material assembly 10 (see FIG. 1B), and that is part of or comprises the the composite structure 120, such as the aircraft composite structure 120a, provides lightning strike protection 11 (see FIG. 1B) to the underlying structural assembly 71 (see FIG. 1B), such as the composite laminate assembly 72 (see FIG. 1B).

Although the aircraft 200a shown in FIG. 5 is generally representative of a commercial passenger aircraft having one or more aircraft composite structures 120a, the teachings of the disclosed versions of the lightning strike protection material assembly 10 (see FIG. 1A), the lightning strike protection material system 12 (see FIG. 1B), and the method 190 (see FIG. 4) may be applied to aircraft composite structures 120a for other passenger aircraft. Moreover, the teachings of the disclosed versions of the lightning strike protection material assembly 10 (see FIG. 1A), the lightning strike protection material system 12, and the method 190 may be applied to aircraft composite structures 120a for cargo aircraft, military aircraft, rotorcraft, and other types of aircraft or aerial vehicles, as well as aerospace vehicles, spacecraft, satellites, space launch vehicles, rockets, and other aerospace vehicles. Further, the teachings of the disclosed versions of the lightning strike protection material assembly 10 (see FIG. 1A), the lightning strike protection material system 12, and the method 190 may be applied to composite structures 120, such as watercraft, automobiles, trains, architectural structures, or other suitable vehicles or structures.

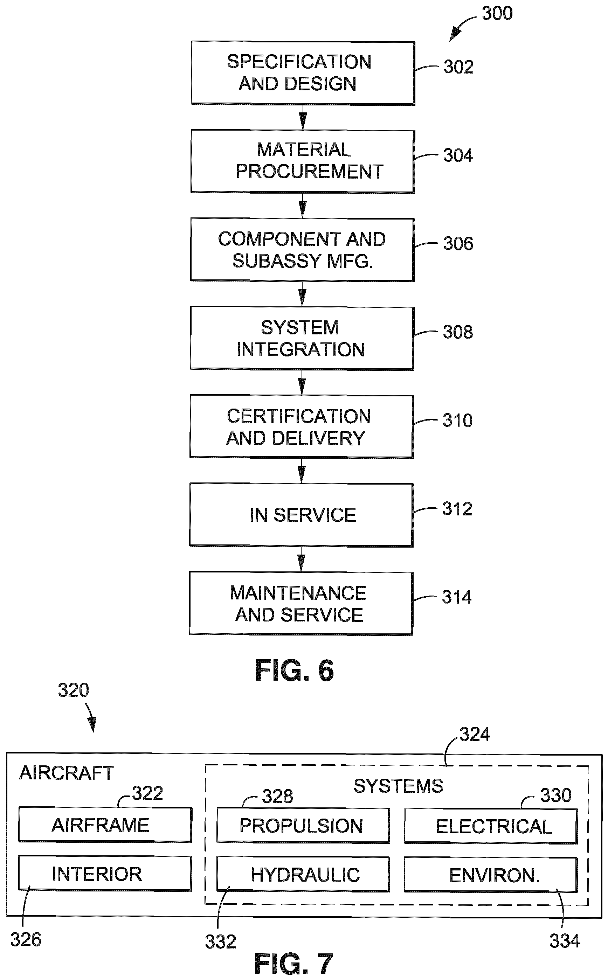

Now referring to FIGS. 6 and 7, FIG. 6 is an illustration of a flow diagram of an exemplary aircraft manufacturing and service method 300, and FIG. 7 is an illustration of an exemplary block diagram of an aircraft 316. Referring to FIGS. 6 and 7, versions of the disclosure may be described in the context of the aircraft manufacturing and service method 300 as shown in FIG. 6, and the aircraft 316 as shown in FIG. 7.

During pre-production, exemplary aircraft manufacturing and service method 300 may include specification and design 302 of the aircraft 316 and material procurement 304. During manufacturing, component and subassembly manufacturing 306 and system integration 308 of the aircraft 316 takes place. Thereafter, the aircraft 316 may go through certification and delivery 310 in order to be placed in service 312. While in service 312 by a customer, the aircraft 316 may be scheduled for routine maintenance and service 314 (which may also include modification, reconfiguration, refurbishment, and other suitable services).

Each of the processes of the aircraft manufacturing and service method 300 may be performed or carried out by a system integrator, a third party, and/or an operator (e.g., a customer). For the purposes of this description, a system integrator may include, without limitation, any number of aircraft manufacturers and major-system subcontractors. A third party may include, without limitation, any number of vendors, subcontractors, and suppliers. An operator may include an airline, leasing company, military entity, service organization, and other suitable operators.

As shown in FIG. 7, the aircraft 316 produced by the exemplary aircraft manufacturing and service method 300 may include an airframe 318 with a plurality of systems 320 and an interior 322. Examples of the plurality of systems 320 may include one or more of a propulsion system 324, an electrical system 326, a hydraulic system 328, and an environmental system 330. Any number of other systems may be included. Although an aerospace example is shown, the principles of the disclosure may be applied to other industries, such as automotive.

Methods and systems embodied herein may be employed during any one or more of the stages of the aircraft manufacturing and service method 300. For example, components or subassemblies corresponding to component and subassembly manufacturing 306 may be fabricated or manufactured in a manner similar to components or subassemblies produced while the aircraft 316 is in service 312. Also, one or more apparatus examples, method examples, or a combination thereof, may be utilized during component and subassembly manufacturing 306 and system integration 308, for example, by substantially expediting assembly of or reducing the cost of the aircraft 316. Similarly, one or more of apparatus examples, method examples, or a combination thereof, may be utilized while the aircraft 316 is in service 312, for example and without limitation, to maintenance and service 314.

Disclosed versions of the lightning strike protection material assembly 10 (see FIG. 1A), the lightning strike protection material system 12 (see FIG. 1B), and the method 190 (see FIG. 4) prevent mixing of the infused resin 45 (see FIG. 1A), or the lightning strike protection material resin 46 (see FIG. 1A), and the structural resin 70 (see FIG. 1B) of the underlying structural assembly 71 (see FIG. 1B), such as the composite laminate assembly 72 (see FIG. 1B) during co-curing 14a (see FIG. 1B) or curing 14 (see FIG. 1B), avoid creating areas in which two dissimilar materials are in close proximity to each other, and provide sufficient infused resin 45 (see FIG. 1A), or lightning strike protection material resin 46 (see FIG. 1A), during co-curing 14a (see FIG. 1B) or curing 14 (see FIG. 1B), to effectively encapsulate the lightning strike expanded metal foil 18 (see FIG. 1A) of the lightning strike expanded metal foil layer 16 (see FIG. 1A).

In addition, disclosed versions of the lightning strike protection material assembly 10 (see FIG. 1A), the lightning strike protection material system 12 (see FIG. 1B), and the method 190 (see FIG. 4) mitigate, minimize, and/or prevents microcracking and microcracks 83 (see FIG. 2E), and have increased microcracking resistance 82 (see FIG. 1B), and provides degradation prevention 84 (see FIG. 1B), to prevent degradation into the underlying composite laminate assembly 72, such as the cured composite laminate assembly 72c (see FIG. 1B). This avoids costly repair or rework.

Moreover, disclosed versions of the lightning strike protection material assembly 10 (see FIG. 1A), the lightning strike protection material system 12 (see FIG. 1B), and the method 190 (see FIG. 4) provide a novel infused resin 45, such as a thermoset resin 58 (see FIG. 1A), with a controlled resin viscosity, or tailored viscosity 60a (see FIG. 1A), a controlled cure profile, or tailored cure profile 62a (see FIG. 1A), and a tailored rheology 64a (see FIG. 1A), related to the lightning strike expanded metal foil 18 (see FIG. 1A), while ensuring chemical compatibility 66 (see FIG. 1A) and bonding capability 68 (see FIG. 1A) between the structural resin 70 and the infused resin 45, or lightning strike protection material resin 46 (see FIG. 1A). Further, the tailored viscosity 60a, the tailored cure profile 62a, and the tailored rheology 64a of the infused resin 45 are different from the structural resin viscosity 60b (see FIG. 1B), the structural resin cure profile 62b (see FIG. 1B), and the structural resin rheology 64b (see FIG. 1B) of the structural resin 70, which prevents the mixing of the structural resin 70 and the infused resin 45, or lightning strike protection material resin 46 (see FIG. 1A). The cured lightning strike protection composite structure 80 (see FIG. 1B), such as co-cured lightning strike protection composite structures 80a (see FIG. 1B), with the lightning strike protection material assembly 10 (see FIG. 1A) and the lightning strike protection material system 12 (see FIG. 1B), disclosed herein, provide improved performance of thermal moisture cycling microcrack resistance in co-cured laminates with structural and lightning strike protection components, such as the cured lightning strike protection composite structures 80, for example, co-cured lightning strike protection composite structures 80a.

The infused resin 45 is laminated with the lightning strike expanded metal foil 18 (see FIG. 1A) using the non-metallic scrim 44 (see FIG. 1A). The composite laminate assembly 72 (see FIG. 1B) comprising the plurality of structural layers 74 (see FIG. 1B), such as the plurality of structural ply layers 75 (see FIG. 1B), made of composite material 90 (see FIG. 1B), such as carbon-fiber reinforced polymers (CFRP) 94 (see FIG. 1B), or carbon-fiber reinforced plastics, or the glass-fiber reinforced polymers (GFRP) 96 (see FIG. 1B), or glass-fiber reinforced plastics, or aramid polymers 100 (see FIG. 1B), and preimpregnated with the structural resin 70 (see FIG. 1B), is co-cured or cured with the lightning strike protection material assembly 10 (see FIG. 1A), to create or form composite structures 120, such as cured lightning strike protection composite structures 80 (see FIG. 1B), for example, co-cured lightning strike protection composite structures 80a (see FIG. 1B). Further, an initial tailored viscosity 60c (see FIG. 1A) of the infused resin 45 may be significantly different than an initial structural resin viscosity 60d (see FIG. 1B) of the structural resin 70, to minimize mixing of the infused resin 45 and the structural resin 70 during initial curing 14b (see FIG. 1B), or initial co-curing 14c (see FIG. 1B). For example, during co-curing 14a, the infused resin 45 in the non-metallic scrim 44 is forced into openings 130 (see FIG. 2C) of the lightning strike expanded metal foil 18, so that the infused resin 45 fully encapsulates, or fully surrounds, the lightning strike expanded metal foil 18. The tailored cure profile 62a of the infused resin 45 initiates crosslinking at a lower temperature 114 (see FIG. 1B), thereby increasing the tailored viscosity 60a of the infused resin 45 quickly, allowing the infused resin 45 to effectively encapsulate the lightning strike expanded metal foil 18, via the encapsulation 76 (see FIG. 1B), while maintaining separation and no mixing of the infused resin 45 with the structural resin 70. These differences prevent the mixing of the two resins, i.e., the infused resin 45 and the structural resin 70, during cure or co-cure, ensuring distinct resin layers and a defined resin boundary 78 (see FIGS. 1B, 2D) in the co-cured panel, such as the cured lightning strike protection composite structures 80, for example, co-cured lightning strike protection composite structures 80a. The result is significantly less surface porosity and improved performance in thermal moisture cycling, as realized by fewer microcracks 83 (see FIG. 2E) in the cured lightning strike protection composite structures 80, such as co-cured lightning strike protection composite structures 80a, after the exposure to thermal moisture cycling. The lack of intermixing of the two resins, i.e., the infused resin 45 and the structural resin 70, reduces the damage to the two resins, i.e., the infused resin 45 and the structural resin 70, caused by the different coefficients of thermal expansion (CTE) 86a, 86b, and the different coefficients of moisture expansion (CME) 88a, 88b, between the two resins, i.e., the infused resin 45 and the structural resin 70.

In addition, disclosed versions of the lightning strike protection material assembly 10 (see FIG. 1A), the lightning strike protection material system 12 (see FIG. 1B), and the method 190 (see FIG. 4) provide environmental protection to products with lightning strike protection over structural composites or composite structures 120 (see FIG. 1B), such as the cured lightning strike protection composite structures 80, for example, co-cured lightning strike protection composite structures 80a. Disclosed versions of the lightning strike protection material assembly 10 (see FIG. 1A), the lightning strike protection material system 12 (see FIG. 1B), and the method 190 (see FIG. 4) prevent premature age damage to the products, such as the cured lightning strike protection composite structures 80, for example, the co-cured lightning strike protection composite structures 80a, caused by thermal moisture cycling, ensuring no degradation and degradation prevention 84 (see FIG. 1B), to the lightning strike protection material assembly 10 and the lightning strike protection material system 12. Further, disclosed versions of the lightning strike protection material assembly 10 (see FIG. 1A), the lightning strike protection material system 12 (see FIG. 1B), and the method 190 (see FIG. 4) may lengthen the period between paint maintenance for products in-service, and reduce potential for damage due to in-service thermal moisture cycling in composite materials with lightning strike protection materials. Depending upon the resin composition of the infused resin 45, the infused resin 45 may also have structural, adhesive, or electrical properties that could be utilized. Moreover, disclosed versions of the lightning strike protection material assembly 10 (see FIG. 1A), the lightning strike protection material system 12 (see FIG. 1B), and the method 190 (see FIG. 4) may allow for a shortened evaluation cycle of new proposed systems to ensure new and better systems can be implemented more rapidly and minimize production and in-service issues.

Many modifications and other versions of the disclosure will come to mind to one skilled in the art to which this disclosure pertains having the benefit of the teachings presented in the foregoing descriptions and the associated drawings. The versions described herein are meant to be illustrative and are not intended to be limiting or exhaustive. Although specific terms are employed herein, they are used in a generic and descriptive sense only and not for purposes of limitation. Functionally equivalent methods and apparatuses within the scope of the disclosure, in addition to those enumerated herein, are possible from the foregoing descriptions. The present disclosure is to be limited only by the terms of the appended claims.

The following clauses present further examples:
Clause 1. A lightning strike protection material assembly (10) comprising:
   a lightning strike expanded metal foil layer (16) comprising a lightning strike expanded metal foil (18); and
   a resin infused scrim layer (42) laminated to the lightning strike expanded metal foil layer (16), the resin infused scrim layer (42) comprising a non-metallic scrim (44) infused with an infused resin (45), the infused resin (45) having a tailored viscosity (60a) and a tailored cure profile (62a),
   wherein the lightning strike protection material assembly (10) is configured for laying up (73) on, and co-curing (14a) with, an uncured composite laminate assembly (72a) comprised of a plurality of structural ply layers (75) preimpregnated with a structural resin (70), and the structural resin (72) has a structural resin viscosity (60b) and a structural resin cure profile (62b) that are different from the tailored viscosity (60a) and the tailored cure profile (62a) of the infused resin (45), to prevent mixing of the structural resin (70) and the infused resin (45) during co-curing (14a), to allow the infused resin (45) to effectively encapsulate the lightning strike expanded metal foil (18), and to provide a defined resin boundary (78), and
   further wherein a cured lightning strike protection composite structure (80) is formed from the co-curing (14a) of the lightning strike protection material assembly (10) and the uncured composite laminate assembly (72a), and the cured lightning strike protection composite structure (80) has lightning strike protection (11), and has an increased microcracking resistance (82) and a degradation prevention (84).
Clause 2. The lightning strike protection material assembly (10) of Clause 1, wherein the lightning strike expanded metal foil (18) comprises a non-continuous metal foil (26) comprising one or more of, a perforated metal foil (28), an expanded metal foil (29), a metal mesh (30), a metallized fiber mesh (31), a metal screen (32), a metallized fiber weave (33), a woven metal (34), a wire mesh (35), a metal foam (36), and an open cell metal foam (36a).
Clause 3. The lightning strike protection material assembly (10) of Clause 1 or Clause 2, wherein the lightning strike expanded metal foil (18) comprises:
   a metal material (38) comprising one or more of, copper (38a), aluminum (38b), titanium (38c), nickel (38d), gold (38e), and silver (38f); or
   a metal alloy material (40) comprising one or more of, copper alloy (40a), aluminum alloy (40b), titanium alloy (40c), nickel alloy (40d), gold alloy (40e), silver alloy (40f), bronze (40g), and brass (40h).
Clause 4. The lightning strike protection material assembly (10) of any preceding Clause, wherein the non-metallic scrim (44) comprises one of, a non-metallic scrim mat (44a), a glass fiber scrim mat (44b), a carbon fiber scrim mat (44c), a woven scrim mat (44d), a knit polyester scrim mat (44e), or a nonwoven scrim mat (44f).
Clause 5. The lightning strike protection material assembly (10) of any preceding Clause, wherein the infused resin (45) comprises a thermoset resin (58) comprising one or more of, an adhesive (58a), an epoxy (58b), a phenolic (58c), a polyimide (58d), a bismaleimide (58e), a polyurethane (58f), a fluoropolymer (58g), and a cyanate ester (58h).
Clause 6. The lightning strike protection material assembly (10) of any preceding Clause, wherein the tailored viscosity (60a) and the tailored cure profile (62a) of the infused resin (45) are related to the lightning strike expanded metal foil (18), and provide a chemical compatibility (66) and a bonding capability (68) between the infused resin (45) and the structural resin (70).
Clause 7. A lightning strike protection material system (12) comprising:
   a lightning strike protection material assembly (10) comprising:
      a lightning strike expanded metal foil layer (16) comprising a lightning strike expanded metal foil (18); and
      a resin infused scrim layer (42) laminated to the lightning strike expanded metal foil layer (16), the resin infused scrim layer (42) comprising a non-metallic scrim (44) infused with an infused resin (45), the infused resin (45) having a tailored viscosity (60a) and a tailored cure profile (62a); and
   an uncured composite laminate assembly (72a) comprised of a plurality of structural ply layers (75) preimpregnated with a structural resin (70), the structural resin (70) having a structural resin viscosity (60b) and a structural resin cure profile (62b) that are different from the tailored viscosity (60a) and the tailored cure profile (62a) of the infused resin (45),
   wherein the lightning strike protection material assembly (10) is laid up on, and co-cured with, the uncured composite laminate assembly (72a), and during co-curing (14a), the structural resin (70) and the infused resin (45) do not mix and provide a defined resin boundary (78), and the infused resin (45) effectively encapsulates the lightning strike expanded metal foil (18), and
   further wherein a cured lightning strike protection composite structure (80) is formed from the co-curing (14a) of the lightning strike protection material assembly (10) and the uncured composite laminate assembly (72a), and the cured lightning strike protection composite structure (80) has lightning strike protection (11), and has an increased microcracking resistance (82) and a degradation prevention (84).
Clause 8. The lightning strike protection material system (12) of Clause 7, wherein the lightning strike expanded metal foil (18) comprises a non-continuous metal foil (26) comprising one or more of, a perforated metal foil (28), an expanded metal foil (29), a metal mesh (30), a metallized fiber mesh (31), a metal screen (32), a metallized fiber weave (33), a woven metal (34), a wire mesh (35), a metal foam (36), and an open cell metal foam (36a).
Clause 9. The lightning strike protection material system (12) of Clause 7 or Clause 8, wherein the lightning strike expanded metal foil (18) comprises:
   a metal material (38) comprising one or more of, copper (38a), aluminum (38b), titanium (38c), nickel (38d), gold (38e), and silver (38f); or
   a metal alloy material (40) comprising one or more of, copper alloy (40a), aluminum alloy (40b), titanium alloy (40c), nickel alloy (40d), gold alloy (40e), silver alloy (40f), bronze (40g), and brass (40h).
Clause 10. The lightning strike protection material system (12) of any of Clauses 7 - 9, wherein the non-metallic scrim (44) comprises one of, a non-metallic scrim mat (44a), a glass fiber scrim mat (44b), a carbon fiber scrim mat (44c), a woven scrim mat (44d), a knit polyester scrim mat (44e), or a nonwoven scrim mat (44f).
Clause 11. The lightning strike protection material system (12) of any of Clauses 7 - 10, wherein the infused resin (45) comprises a thermoset resin (58) comprising one or more of, an adhesive (58a), an epoxy (58b), a phenolic (58c), a polyimide (58d), a bismaleimide (58e), a polyurethane (58f), a fluoropolymer (58g), and a cyanate ester (58h).
Clause 12. The lightning strike protection material system (12) of any of Clauses 7 - 11, wherein the plurality of structural ply layers (75) each comprises a composite material (90) comprising one of, one or more carbon-fiber reinforced polymers (94), one or more glass-fiber reinforced polymers (96), or one or more aramid polymers (102).
Clause 13. The lightning strike protection material system (12) of any of Clauses 7 - 12, wherein the structural resin (70) comprises a thermoset structural resin (104) comprising one or more of, an epoxy structural resin (104a), a phenolic structural resin (104b), a polyimide structural resin (104c), a bismaleimide structural resin (104d), a polyurethane structural resin (104e), a fluoropolymer structural resin (104f), and a cyanate ester structural resin (104g).
Clause 14. The lightning strike protection material system (12) of any of Clauses 7 - 13, wherein the cured lightning strike protection composite structure (80) comprises one or more of,
   a wing panel (122a) of a wing (204) of an aircraft (200a);
   a horizontal stabilizer panel (122b) of a horizontal stabilizer (212) of the aircraft (200a); and
   a fuselage panel (122c) of a fuselage (202) of the aircraft (200a).
Clause 15. A method (190) of using a lightning strike protection material system (12), to provide an increased microcracking resistance (82) and a degradation prevention (84) for a cured lightning strike protection composite structure (80), the method (190) comprising the steps of:
   (192) providing the lightning strike protection material system (12) comprising:
      a lightning strike protection material assembly (10) comprising:
         a lightning strike expanded metal foil layer (16) comprising a lightning strike expanded metal foil (18); and
         a resin infused scrim layer (42) laminated to the lightning strike expanded metal foil layer (16), the resin infused scrim layer (42) comprising a non-metallic scrim (44) infused with an infused resin (45), the infused resin (45) having a tailored viscosity (60a) and a tailored cure profile (62a); and
      an uncured composite laminate assembly (72a) comprised of a plurality of structural ply layers (75) preimpregnated with a structural resin (70), the structural resin (70) having a structural resin viscosity (60b) and a structural resin cure profile (62b) that are different from the tailored viscosity (60a) and the tailored cure profile (62a) of the infused resin (45);
   (194) laying up (73) the lightning strike protection material assembly (10) on the uncured composite laminate assembly (72a);
   (196) co-curing (14a) in an autoclave (110) with heat (112), the lightning strike protection material assembly (10) on the uncured composite laminate assembly (72a), and during the co-curing (14a), the structural resin (70) and the infused resin (45) do not mix and provide a defined resin boundary (78), and the infused resin (45) effectively encapsulates the lightning strike expanded metal foil (18); and
   (198) obtaining the cured lightning strike protection composite structure (80) formed from the co-curing (14a) of the lightning strike protection material assembly (10) and the uncured composite laminate assembly (72a), and using the lightning strike protection material system (12) to provide the increased microcracking resistance (82) and the degradation prevention (84), and lightning strike protection (11) for the cured lightning strike protection composite structure (80).
Clause 16. The method (190) of Clause 15, wherein the step (192) of providing the lightning strike protection material system (12) further comprises, providing the lightning strike protection material system (12) with the lightning strike protection material assembly (10), wherein the lightning strike expanded metal foil (18) comprises:
   a non-continuous metal foil (26) comprising one or more of, a perforated metal foil (28), an expanded metal foil (29), a metal mesh (30), a metallized fiber mesh (31), a metal screen (32), a metallized fiber weave (33), a woven metal (34), a wire mesh (35), a metal foam (36), and an open cell metal foam (36a); and
   further wherein the lightning strike expanded metal foil (18) comprises:
      a metal material (38) comprising one or more of, copper (38a), aluminum (38b), titanium (38c), nickel (38d), gold (38e), and silver (38f); or
      a metal alloy material (40) comprising one or more of, copper alloy (40a), aluminum alloy (40b), titanium alloy (40c), nickel alloy (40d), gold alloy (40e), silver alloy (40f), bronze (40g), and brass (40h).
Clause 17. The method (190) of Clause 15 or Clause 16, wherein the step (192) of providing the lightning strike protection material system (12) further comprises, providing the lightning strike protection material system (12) with the lightning strike protection material assembly (10), where the infused resin (45) comprises a thermoset resin (58) comprising one or more of, an adhesive (58a), an epoxy (58b), a phenolic (58c), a polyimide (58d), a bismaleimide (58e), a polyurethane (58f), a fluoropolymer (58g), and a cyanate ester (58h).
Clause 18. The method (190) of any of Clauses 15 - 17, wherein the step (196) of co-curing (14a) in the autoclave (110) with heat (112), the lightning strike protection material assembly (10) on the uncured composite laminate assembly (72a), further comprises,
   initially heating the uncured composite laminate assembly (72a) to an initial temperature (114a), to generate a partially cured composite laminate assembly (10b), wherein the initially heating is sufficient to gel the infused resin (45), which is uncured, but is insufficient to gel the structural resin (70), which is uncured; and
   subsequently heating the partially cured composite laminate assembly (10b) to a final temperature (114c), which is greater than the initial temperature (114a), to generate the cured lightning strike protection composite structure (80), wherein a combination of the initially heating and the subsequently heating is sufficient to fully cure both the infused resin (45) and the structural resin (70).
Clause 19. The method (190) of Clause 18, wherein the step (196) of co-curing (14a) in the autoclave (110) with heat (112), the lightning strike protection material assembly (10) on the uncured composite laminate assembly (72a), further comprises, applying a pressure (118) to at least one of:
   the uncured composite laminate assembly (72a) and during the initially heating; and
   the partially cured composite laminate assembly (72b) and during the subsequently heating.
Clause 20. The method (190) of any of Clauses 15 - 19, wherein the step (198) of obtaining the cured lightning strike protection composite structure (80) further comprises, obtaining the cured lightning strike protection composite structure (80) comprising one of,
   a wing panel (122a) of a wing (204) of an aircraft (200a);
   a horizontal stabilizer panel (122b) of a horizontal stabilizer (212) of the aircraft (200a); or
   a fuselage panel (122c) of a fuselage (202) of the aircraft (200a).
Clause 21. An aircraft (200a) comprising the lightning strike protection composite structure (80) of any of Clauses 1 - 14, and optionally, wherein the cured lightning strike protection composite structure (80) comprises one or more of:
   a wing panel (122a) of a wing (204) of the aircraft (200a);
   a horizontal stabilizer panel (122b) of a horizontal stabilizer (212) of the aircraft (200a); and
   a fuselage panel (122c) of a fuselage (202) of the aircraft (200a).
Clause A1. A cured lightning strike protection composite structure (80) comprising:
   a cured lightning strike protection material assembly (10c) comprising:
      a lightning strike expanded metal foil layer (16) comprising an encapsulated lightning strike expanded metal foil (18a); and
      a resin infused scrim layer (42) laminated to the lightning strike expanded metal foil layer (16), the resin infused scrim layer (42) comprising a non-metallic scrim (44) infused with a cured infused resin (45c), and wherein the encapsulated lightning strike expanded metal foil (18a) is encapsulated by the cured infused resin (45c); and
   a cured composite laminate assembly (72c) comprised of a plurality of structural ply layers (75) with a cured structural resin (70c),
   wherein the cured lightning strike protection material assembly (10c) is co-cured (14a) with the cured composite laminate assembly (72c), and
   wherein the cured infused resin (45c) and the cured structural resin (70c) provide a defined resin boundary (78) between the resin infused scrim layer (42) and the cured composite laminate assembly (72c).
Clause A1a. The cured lightning strike protection composite structure (80) of Clause A1, wherein the cured lightning strike protection composite structure (80) has lightning strike protection (11) and has an increased microcracking resistance (82) and a degradation prevention (84).
Clause A2. The cured lightning strike protection composite structure (80) of Clause A1 or Clause A1a, wherein the encapsulated lightning strike expanded metal foil (18a) comprises a non-continuous metal foil (26) comprising one or more of, a perforated metal foil (28), an expanded metal foil (29), a metal mesh (30), a metallized fiber mesh (31), a metal screen (32), a metallized fiber weave (33), a woven metal (34), a wire mesh (35), a metal foam (36), and an open cell metal foam (36a).
Clause A3. The cured lightning strike protection composite structure (80) of Clause A1, Clause A1a or Clause A2, wherein the encapsulated lightning strike expanded metal foil (18a) comprises:
   a metal material (38) comprising one or more of, copper (38a), aluminum (38b), titanium (38c), nickel (38d), gold (38e), and silver (38f); or
   a metal alloy material (40) comprising one or more of, copper alloy (40a), aluminum alloy (40b), titanium alloy (40c), nickel alloy (40d), gold alloy (40e), silver alloy (40f), bronze (40g), and brass (40h). Clause A4. The cured lightning strike protection composite structure (80) of any of Clauses A1 - A3, wherein the non-metallic scrim (44) comprises one of, a non-metallic scrim mat (44a), a glass fiber scrim mat (44b), a carbon fiber scrim mat (44c), a woven scrim mat (44d), a knit polyester scrim mat (44e), or a nonwoven scrim mat (44f).
Clause A5. The cured lightning strike protection composite structure (80) of any of Clauses A1 - A4, wherein the cured infused resin (45c) comprises a thermoset resin (58) comprising one or more of, an adhesive (58a), an epoxy (58b), a phenolic (58c), a polyimide (58d), a bismaleimide (58e), a polyurethane (58f), a fluoropolymer (58g), and a cyanate ester (58h).
Clause A6. The cured lightning strike protection composite structure (80) of any of Clauses A1 - A5, wherein the plurality of structural ply layers (75) each comprises a composite material (90) comprising one of, one or more carbon-fiber reinforced polymers (94), one or more glass-fiber reinforced polymers (96), or one or more aramid polymers (102).
Clause A7. The cured lightning strike protection composite structure (80) of any of Clauses A1 - A6, wherein the cured structural resin (70c) comprises a thermoset structural resin (104) comprising one or more of, an epoxy structural resin (104a), a phenolic structural resin (104b), a polyimide structural resin (104c), a bismaleimide structural resin (104d), a polyurethane structural resin (104e), a fluoropolymer structural resin (104f), and a cyanate ester structural resin (104g).
Clause A8. The cured lightning strike protection composite structure (80) of any of Clauses A1 - A7, wherein the cured lightning strike protection composite structure (80) comprises one or more of:
   a wing panel (122a) of a wing (204) of an aircraft (200a);
   a horizontal stabilizer panel (122b) of a horizontal stabilizer (212) of the aircraft (200a); and
   a fuselage panel (122c) of a fuselage (202) of the aircraft (200a).
Clause A9. The cured lightning strike protection composite structure (80) of any Clauses A1 - A8, wherein the defined resin boundary (78) is a distinct boundary between the resin infused scrim layer (42) and the cured composite laminate assembly (72c).
Clause A10. An aircraft (200a) comprising the cured lightning strike protection composite structure (80) of any of Clauses A1 - A9.
Clause A11. The aircraft (200a) of Clause A10, wherein the cured lightning strike protection composite structure (80) comprises one or more of:
   a wing panel (122a) of a wing (204) of the aircraft (200a);
   a horizontal stabilizer panel (122b) of a horizontal stabilizer (212) of the aircraft (200a); and
   a fuselage panel (122c) of a fuselage (202) of the aircraft (200a).
Clause A12. A method (190) of forming the cured lightning strike protection composite structure (80) of any of Clauses A1 - A9, the method (190) comprising the steps of:
   laying up (194, 73) an uncured lightning strike protection material assembly (10a) on an uncured composite laminate assembly (72a), wherein:
      the uncured lightning strike protection material assembly (10a) comprises:
         a lightning strike expanded metal foil layer (16) comprising a lightning strike expanded metal foil (18); and
         a resin infused scrim layer (42) laminated to the lightning strike expanded metal foil layer (16), the resin infused scrim layer (42) comprising a non-metallic scrim (44) infused with an infused resin (45), the infused resin (45) having a tailored viscosity (60a) and a tailored cure profile (62a); and
      the uncured composite laminate assembly (72a) is comprised of a plurality of structural ply layers (75) preimpregnated with a structural resin (70), the structural resin (70) having a structural resin viscosity (60b) and a structural resin cure profile (62b) that are different from the tailored viscosity (60a) and the tailored cure profile (62a) of the infused resin (45); and
   co-curing (196, 14a), in an autoclave (110) with heat (112), the uncured lightning strike protection material assembly (10a) on the uncured composite laminate assembly (72a) to form the cured lightning strike protection composite structure (80),
   wherein, during the co-curing (14a), the structural resin (70) and the infused resin (45) do not mix and provide a defined resin boundary (78) between the resin infused scrim layer (42) and the cured composite laminate assembly (72c), and wherein the infused resin (45) effectively encapsulates the lightning strike expanded metal foil (18).
Clause A12a. A method (190) of Clause A12, wherein the cured lightning strike protection composite structure (80) has increased microcracking resistance (82), has degradation prevention (84), and has lightning strike protection (11).
Clause A13. The method (190) of Clause A12 or Clause A12a, wherein the step of co-curing (196, 14a) comprises:
   initially heating the uncured composite laminate assembly (72a) to an initial temperature (114a), to generate a partially cured composite laminate assembly (10b), wherein the initially heating is sufficient to gel the infused resin (45), which is uncured, but is insufficient to gel the structural resin (70), which is uncured; and
   subsequently heating the partially cured composite laminate assembly (10b) to a final temperature (114c), which is greater than the initial temperature (114a), to generate the cured lightning strike protection composite structure (80), wherein a combination of the initially heating and the subsequently heating is sufficient to fully cure both the infused resin (45) and the structural resin (70).
Clause A14. The method (190) of Clause A12, Clause A12a or Clause A13, wherein the step of co-curing (196, 14a) further comprises applying a pressure (118) to at least one of:
   the uncured composite laminate assembly (72a) during the initially heating; and
   the partially cured composite laminate assembly (72b) during the subsequently heating.
Clause A15. The method (190) of any of Clauses A12 - A14, wherein the tailored viscosity (60a) and the tailored cure profile (62a) of the infused resin (45) are related to the lightning strike expanded metal foil (18), and provide a chemical compatibility (66) and a bonding capability (68) between the infused resin (45) and the structural resin (70).

## Claims

1. A cured lightning strike protection composite structure (80) comprising:
a cured lightning strike protection material assembly (10c) comprising:
a lightning strike expanded metal foil layer (16) comprising an encapsulated lightning strike expanded metal foil (18a); and
a resin infused scrim layer (42) laminated to the lightning strike expanded metal foil layer (16), the resin infused scrim layer (42) comprising a non-metallic scrim (44) infused with a cured infused resin (45c), and wherein the encapsulated lightning strike expanded metal foil (18a) is encapsulated by the cured infused resin (45c); and
a cured composite laminate assembly (72c) comprised of a plurality of structural ply layers (75) with a cured structural resin (70c),
wherein the cured lightning strike protection material assembly (10c) is co-cured (14a) with the cured composite laminate assembly (72c), and
wherein the cured infused resin (45c) and the cured structural resin (70c) provide a defined resin boundary (78) between the resin infused scrim layer (42) and the cured composite laminate assembly (72c).

2. The cured lightning strike protection composite structure (80) of claim 1, wherein the encapsulated lightning strike expanded metal foil (18a) comprises a non-continuous metal foil (26) comprising one or more of, a perforated metal foil (28), an expanded metal foil (29), a metal mesh (30), a metallized fiber mesh (31), a metal screen (32), a metallized fiber weave (33), a woven metal (34), a wire mesh (35), a metal foam (36), and an open cell metal foam (36a).

3. The cured lightning strike protection composite structure (80) of claim 1 or claim 2, wherein the encapsulated lightning strike expanded metal foil (18a) comprises:
a metal material (38) comprising one or more of, copper (38a), aluminum (38b), titanium (38c), nickel (38d), gold (38e), and silver (38f); or
a metal alloy material (40) comprising one or more of, copper alloy (40a), aluminum alloy (40b), titanium alloy (40c), nickel alloy (40d), gold alloy (40e), silver alloy (40f), bronze (40g), and brass (40h).

4. The cured lightning strike protection composite structure (80) of any preceding claim, wherein the non-metallic scrim (44) comprises one of, a non-metallic scrim mat (44a), a glass fiber scrim mat (44b), a carbon fiber scrim mat (44c), a woven scrim mat (44d), a knit polyester scrim mat (44e), or a nonwoven scrim mat (44f).

5. The cured lightning strike protection composite structure (80) of any preceding claim, wherein the cured infused resin (45c) comprises a thermoset resin (58) comprising one or more of, an adhesive (58a), an epoxy (58b), a phenolic (58c), a polyimide (58d), a bismaleimide (58e), a polyurethane (58f), a fluoropolymer (58g), and a cyanate ester (58h).

6. The cured lightning strike protection composite structure (80) of any preceding claim, wherein the plurality of structural ply layers (75) each comprises a composite material (90) comprising one of, one or more carbon-fiber reinforced polymers (94), one or more glass-fiber reinforced polymers (96), or one or more aramid polymers (102).

7. The cured lightning strike protection composite structure (80) of any preceding claim, wherein the cured structural resin (70c) comprises a thermoset structural resin (104) comprising one or more of, an epoxy structural resin (104a), a phenolic structural resin (104b), a polyimide structural resin (104c), a bismaleimide structural resin (104d), a polyurethane structural resin (104e), a fluoropolymer structural resin (104f), and a cyanate ester structural resin (104g).

8. The cured lightning strike protection composite structure (80) of any preceding claim, wherein the cured lightning strike protection composite structure (80) comprises one or more of:
a wing panel (122a) of a wing (204) of an aircraft (200a);
a horizontal stabilizer panel (122b) of a horizontal stabilizer (212) of the aircraft (200a); and
a fuselage panel (122c) of a fuselage (202) of the aircraft (200a).

9. The cured lightning strike protection composite structure (80) of any preceding claim, wherein the defined resin boundary (78) is a distinct boundary between the resin infused scrim layer (42) and the cured composite laminate assembly (72c).

10. An aircraft (200a) comprising the cured lightning strike protection composite structure (80) of any preceding claim.

11. The aircraft (200a) of claim 10, wherein the cured lightning strike protection composite structure (80) comprises one or more of:
a wing panel (122a) of a wing (204) of the aircraft (200a);
a horizontal stabilizer panel (122b) of a horizontal stabilizer (212) of the aircraft (200a); and
a fuselage panel (122c) of a fuselage (202) of the aircraft (200a).

12. A method (190) of forming the cured lightning strike protection composite structure (80) of any of claims 1 - 9, the method (190) comprising the steps of:
laying up (194, 73) an uncured lightning strike protection material assembly (10a) on an uncured composite laminate assembly (72a), wherein:
the uncured lightning strike protection material assembly (10a) comprises:
a lightning strike expanded metal foil layer (16) comprising a lightning strike expanded metal foil (18); and
a resin infused scrim layer (42) laminated to the lightning strike expanded metal foil layer (16), the resin infused scrim layer (42) comprising a non-metallic scrim (44) infused with an infused resin (45), the infused resin (45) having a tailored viscosity (60a) and a tailored cure profile (62a); and
the uncured composite laminate assembly (72a) is comprised of a plurality of structural ply layers (75) preimpregnated with a structural resin (70), the structural resin (70) having a structural resin viscosity (60b) and a structural resin cure profile (62b) that are different from the tailored viscosity (60a) and the tailored cure profile (62a) of the infused resin (45); and
co-curing (196, 14a), in an autoclave (110) with heat (112), the uncured lightning strike protection material assembly (10a) on the uncured composite laminate assembly (72a) to form the cured lightning strike protection composite structure (80),
wherein, during the co-curing (14a), the structural resin (70) and the infused resin (45) do not mix and provide a defined resin boundary (78) between the resin infused scrim layer (42) and the cured composite laminate assembly (72c), and wherein the infused resin (45) effectively encapsulates the lightning strike expanded metal foil (18).

13. The method (190) of claim 12, wherein the step of co-curing (196, 14a) comprises:
initially heating the uncured composite laminate assembly (72a) to an initial temperature (114a), to generate a partially cured composite laminate assembly (10b), wherein the initially heating is sufficient to gel the infused resin (45), which is uncured, but is insufficient to gel the structural resin (70), which is uncured; and
subsequently heating the partially cured composite laminate assembly (10b) to a final temperature (114c), which is greater than the initial temperature (114a), to generate the cured lightning strike protection composite structure (80), wherein a combination of the initially heating and the subsequently heating is sufficient to fully cure both the infused resin (45) and the structural resin (70).

14. The method (190) of claim 12 or claim 13, wherein the step of co-curing (196, 14a) further comprises applying a pressure (118) to at least one of:
the uncured composite laminate assembly (72a) during the initially heating; and
the partially cured composite laminate assembly (72b) during the subsequently heating.

15. The method (190) of any of claims 12 - 14, wherein the tailored viscosity (60a) and the tailored cure profile (62a) of the infused resin (45) are related to the lightning strike expanded metal foil (18), and provide a chemical compatibility (66) and a bonding capability (68) between the infused resin (45) and the structural resin (70).
